# EUROPEAN PATENT APPLICATION

(11) **EP 4 694 346 A1**
(43) Date of publication of application: **11.02.2026**
(21) Application number: 24784797.3
(22) Date of filing: 27.03.2024
(51) Int. Cl.: H04W 36/06, H04W 16/28, H04W 80/02, H04W 88/08

(54) **DISTRIBUTED UNIT, CENTRAL UNIT, RAN NODE, WIRELESS TERMINAL, AND METHODS THEREOF**

(30) Priority: 04.04.2023 JP 2023061041
(71) Applicant: NEC Corporation, 108-8001 Tokyo (JP)
(72) Inventor: FUTAKI Hisashi, Tokyo 108-8001 (JP); HAYASHI Sadafuku, Tokyo 108-8001 (JP)
(74) Representative: Mathys & Squire
(86) International application number: PCT/JP2024/012163
(87) International publication number: WO 2024/210008

(57) **Abstract**

A distributed unit (DU) receives one or more first messages from a central unit (CU) regarding preparation of one or more candidate cells for Layer-1/Layer-2 triggered mobility (LTM) of a radio terminal. In response to receiving the one or more first messages, the DU sends one or more second messages to the CU. The one or more second messages indicate whether a full Medium Access Control (MAC) reset or a partial MAC reset is to be applied to an LTM cell switch between an initial source cell and any cell included in the one or more candidate cells, or between any two cells included in the one or more candidate cells. For example, this enables the DU to inform the CU whether a full MAC reset or a partial MAC reset is to be applied to the LTM candidate cells provided by the DU.

## Description

### Technical Field

The present disclosure relates to radio communication systems, and in particular to mobility of a User Equipment (UE).

### Background Art

The 3rd Generation Partnership Project (3GPP) has discussed Layer-1 (L1)/Layer-2 (L2) mobility enhancements for 3GPP Release 18 (See, for example, Non-Patent Literature 1-7). If a UE moves from the coverage area of one cell to another, a serving cell change needs to be performed at some point. Currently, the serving cell change is triggered by a Layer-3 (L3) measurement and is performed by a reconfiguration with synchronization triggered by Radio Resource Control (RRC) signaling for Primary Cell (PCell) and Primary Secondary Cell Group (SCG) Cell (PSCell) change, and involves the release and addition of Secondary Cells (SCells), if applicable. In all cases, a full reset of L2 (and L1) is performed, resulting in longer latency, higher overhead, and longer interruption time compared to beam-switched mobility (or beam-level mobility). The goal of L1/L2 mobility enhancement is to enable a serving cell change through L1/L2 signaling to reduce latency, overhead, and interruption time. L1/L2 signaling refers to either or both L1 signaling and L2 signaling.

As described in Non-Patent Literature 1, one of the detailed objectives of the L1/L2 mobility enhancement work item is to specify mechanisms and procedures for L1/L2-based inter-cell mobility for latency reduction. These include:
- Configuration and maintenance for multiple candidate cells to allow fast application of configurations for candidate cells;
- Dynamic switch mechanism among candidate serving cells (including Special Cell (SpCell) and SCell) for the potential applicable scenarios based on L1/L2 signalling;
- L1 enhancements for inter-cell beam management, including L1 measurement and reporting, and beam indication;
- Timing Advance management;
- Signaling at the interface between a gNB Central Unit (gNB-CU) and a gNB Distributed Unit (gNB-DU) to support L1/L2 mobility, if needed.

Currently, L1/L2-based inter-cell mobility is referred to as L1/L2-triggered mobility (LTM) (see, for example, Non-Patent Literature 2-7). As described in Non-Patent Literature 2, LTM is a procedure in which a gNB receives L1 measurement reports from a UE and, based on these reports, changes one or more serving cells of the UE through L2 signaling, specifically Medium Access Control (MAC) Control Element (MAC CE). The gNB prepares one or more candidate cells and provides the candidate cell configurations to the UE via an RRC message. Then, the gNB triggers an LTM cell switch by selecting one of the candidate cell configurations as the target configuration for LTM. The candidate cell configurations can be added, modified, or released only by the network via RRC signals.

Non-Patent Literature 2 discloses that the following principles apply to LTM. An LTM candidate cell configuration may be provided on top of a reference configuration or as a delta configuration relative to the reference configuration. The reference configuration is managed separately from the delta configuration of each candidate cell, and the UE stores the reference configuration as a configuration separate from each candidate cell's delta configuration. The user plane is continued without reset whenever possible (e.g., intra-DU) to avoid data loss and an additional delay of data recovery. Security is not updated in LTM. Subsequent LTM between candidate cells (i.e., the UE does not release other candidate cell configurations after LTM is triggered) can be performed without RRC reconfiguration.

LTM supports both intra-DU mobility within a gNB-DU and intra-gNB-CU inter-gNB-DU mobility between gNB-DUs within a gNB-CU. LTM supports not only intra-frequency mobility but also inter-frequency mobility. LTM supports the following scenarios: PCell change in non-Carrier Aggregation (CA) scenario; PCell change without SCell change in CA scenario; PCell change with SCell change in CA scenario; and Dual Connectivity scenario. The PCell change with SCell change in CA scenario includes a) cases where the target PCell or target SCell(s) is not a current serving cell (i.e., CA-to-CA scenario with PCell change), b) cases where the target PCell is a current SCell, and c) cases where the target SCell is the current PCell. The Dual Connectivity scenario includes at least the PSCell change without Master Node (MN) involvement case.

In intra-DU LTM, it is possible to perform a partial MAC reset instead of a full MAC reset as performed in L3 mobility (see, for example, Non-Patent Literature 2-5). The network explicitly controls whether the UE performs a partial or a full MAC reset upon an LTM cell switch. As a full MAC reset is equivalent to a standard MAC reset, it can be referred to as simply a MAC reset.

Non-Patent Literature 5 presents a method by which the network informs the UE of a set of cells that do not require a full MAC reset (i.e., a partial MAC reset is sufficient) during LTM between cells, without explicitly indicating the DU ID. One way the network can do this is by sending a list of cell sets to the UE. In a set of cells, each candidate cell can be identified using an LTM candidate ID, a cell ID, or a combination of a Physical Cell Identity (PCI) and a Synchronization Signal (SS)/Physical Broadcast Channel (PBCH) block (SSB) frequency. In another way described in Non-Patent Literature 5, a set ID is used to indicate a set of cells for which a partial MAC reset is possible. The network indicates the set ID for each LTM candidate ID. After comparing these multiple options, Non-Patent Literature 5 proposes that the LTM candidate ID be used to determine whether to reset Layer 2 (e.g., MAC), based on RRC configuration. An LTM candidate ID may be referred to as an (LTM) candidate ID, (LTM) candidate index, (LTM) configuration ID, (LTM) configuration index, (LTM) candidate configuration ID, or (LTM) candidate configuration index. Non-Patent Literature 5 also states that further consideration is needed when a different solution is required, such as in cases where an LTM candidate ID is not unique per LTM candidate (cell).

Non-Patent Literature 6 discloses inter-gNB-DU LTM, i.e., an LTM procedure in which a UE moves from one gNB-DU to another gNB-DU within the same gNB-CU. The gNB-CU receives an L3 measurement report from the UE and decides to start LTM preparation (or LTM configuration). The gNB-CU sends one or more UE CONTEXT SETUP REQUEST messages to a candidate gNB-DU regarding the preparation of one or more candidate cells. It is still under consideration whether to use a single UE Context Setup procedure to prepare multiple candidate cells or to use multiple UE Context Setup procedures, each for a single candidate cell. If the candidate gNB-DU accepts the request of the LTM configuration, it responds to the gNB-CU with one or more UE CONTEXT SETUP RESPONSE messages. One or more UE CONTEXT SETUP RESPONSE messages contain the RRC configurations generated for one or more accepted candidate cells.

Non-Patent Literature 7 proposes improvements to F1 Application Protocol (F1AP) messages sent from a gNB-CU to a gNB-DU to support LTM. Specifically, Non-Patent Literature 7 proposes adding a new information element (IE) called an "LTM Information" IE to the UE CONTEXT SETUP REQUEST and UE CONTEXT MODIFICATION REQUEST messages to support LTM.

Patent Literature 1 discloses L1/L2-based inter-cell mobility or similar technologies. In particular, Fig. 2 and paragraph [0078] of Patent Literature 1 describe a case (i.e., Case 2) in which the UE changes the serving cell between two TRPs within a single DU. Meanwhile, Fig. 2 and paragraph [0079] of Patent Literature 1 describe a case (i.e., Case 3) where the UE changes the serving cell between two TRPs between different DUs.

### Citation List

### Patent Literature

[Patent Literature 1] US 2018/0279182 A1

### Non Patent Literature

[Non-Patent Literature 1] MediaTek Inc., "Revised WID on Further NR mobility enhancements", RP-221799, 3GPP TSG-RAN Meeting #96, Budapest, Hungary, June 6-9, 2022
[Non-Patent Literature 2] MediaTek Inc., "38.300 running CR for introduction of NR further mobility enhancements", R2-2302039, 3GPP TSG-RAN WG2 Meeting #121, Athens, Greece, February 27-March 3, 2023
[Non-Patent Literature 3] vivo, MediaTek, Xiaomi, "Potential Partial MAC Reset for intra-DU LTM", R2-2213336, 3GPP TSG-RAN WG2 Meeting #120, Toulouse, France, November 14-18, 2022
[Non-Patent Literature4] NEC, "Discussion on L2 reset for subsequent LTM", R2-2211886, 3GPP TSG-RAN WG2 Meeting #120, Toulouse, France, November 14-18, 2022
[Non-Patent Literature5] Ericsson, "CB Offline 21 (former 22) Progress TP RRC for LTM", R2-2302290, 3GPP TSG-RAN WG2 Meeting #121, Athens, Greece, February 27 - March 3, 2023
[Non-Patent Literature6] Huawei, Ericsson, Nokia, Nokia Shanghai Bell, ZTE, CMCC, Qualcomm Incorporated, "(TP for L1L2Mob BLCR for TS 38.401): BLCR update with latest agreements for inter-DU LTM", R3-231026, 3GPP TSG-RAN WG3 Meeting #119, Athens, Greece, February 27 - March 3, 2023
[Non-Patent Literature7] Ericsson, Huawei, Nokia, Nokia Shanghai Bell, Intel Corporation, "Additions for L1/L2 triggered mobility", R3-230067, 3GPP TSG-RAN WG3 Meeting #119, Athens, Greece, February 27 - March 3, 2023

### Summary of Invention

### Technical Problem

The inventors have studied LTM and identified a number of problems. One of these problems concerns the determination by a gNB of a set of LTM candidate cells to which a partial MAC reset is applied. Currently, it is unclear how a gNB-CU, a gNB-DU, or both determines a set of LTM candidate cells to which a partial MAC reset is applied.

Another problem concerns improvements to enable a UE to determine whether a full MAC reset or a partial MAC reset should be applied to an LTM cell switch from the initial source cell to a candidate cell. In this specification, the initial source cell (or initial serving cell) is the source cell (or serving cell) where the UE is initially configured with LTM configurations for one or more candidate cells. If the focus is on the behavior (or control) in the LTM preparation phase, the initial source cell (or initial serving cell) may simply be referred to as the source cell (or serving cell). As described above, Non-Patent Literature 5 presents a method by which a network informs a UE of a set of candidate cells for which a full MAC reset is not required (i.e., a partial MAC reset is sufficient) during LTM between cells. The method described in Non-Patent Literature 5 enables a UE to recognize a cell set to which multiple candidate cells belong. However, currently, it is unclear how the UE knows a cell set to which the initial source cell belongs along with one or more candidate cells. This problem may be particularly noticeable in cases where the initial source cell is not one of the candidate cells for subsequent LTMs.

Another issue concerns the handling of the initial source cell configuration for subsequent LTMs. The initial source cell (or initial serving cell) can be one of the candidate cells for subsequent LTMs. In some implementations, the UE may retain the initial source cell configuration after the first LTM without releasing it, and may use the retained initial source cell configuration for subsequent LTMs. For this purpose, an LTM-related identifier (e.g., LTM candidate ID) needs to be assigned to the initial source cell or its cell configuration to distinguish the cell configuration of the initial source cell from other candidate cell configurations. However, it is unclear how this assignment should be performed.

Another issue concerns the behavior of a UE with an LTM configuration when it detects a radio link failure or an LTM failure. Specifically, it is unclear how the UE should perform an RRC connection reestablishment procedure.

Another issue concerns signaling between a gNB-CU Control Plane (gNB-CU-CP) and a gNB-CU User Plane (gNB-CU-UP) to support LTM. It is unclear how the gNB-CU-UP knows whether a UE performs a partial MAC reset during an LTM cell switch.

One of the objectives to be achieved by the example embodiments disclosed herein seek to achieve is to provide apparatuses, methods, and programs that contribute to solving at least one of a plurality of problems, including the problems described above. It should be noted that this object is only one of the objects to be achieved by the example embodiments disclosed herein. Other objects or problems and novel features will become apparent from the following description and the accompanying drawings.

### Solution to Problem

In a first aspect, a DU of a radio access network (RAN) node (e.g., gNB) is configured to receive one or more first messages from a CU of the RAN node regarding preparation of one or more candidate cells for LTM of a radio terminal. The DU is configured to, in response to receiving the one or more first messages, send one or more second messages to the CU indicating whether a full MAC reset or a partial MAC reset is to be applied to an LTM cell switch between an initial source cell and any cell included in the one or more candidate cells, or between any two cells included in the one or more candidate cells.

In a second aspect, a method performed by a DU of a RAN node includes receiving one or more first messages from a CU of the RAN node regarding preparation of one or more candidate cells for LTM of a radio terminal. Additionally, the method includes, in response to receiving the one or more first messages, sending one or more second messages to the CU indicating whether a full MAC reset or a partial MAC reset is to be applied to the LTM cell switch between an initial source cell and any cell included in the one or more candidate cells, or between any two cells included in the one or more candidate cells.

In a third aspect, the CU of the RAN node is configured to send one or more first messages to a DU of the RAN node regarding preparation of one or more candidate cells for LTM of a radio terminal. The CU is configured to, after sending the one or more first messages, receive one or more second messages from the DU indicating whether a full MAC reset or a partial MAC reset is to be applied to an LTM cell switch between an initial source cell and any cell included in the one or more candidate cells, or between any two cells included in the one or more candidate cells.

In a fourth aspect, a method performed by a CU of a RAN node includes sending one or more first messages to a DU of the RAN node regarding preparation of one or more candidate cells for LTM of a radio terminal. Additionally, the method includes, after sending the one or more first messages, receiving one or more second messages from the DU indicating whether a full MAC reset or a partial MAC reset is to be applied to an LTM cell switch between an initial source cell and any cell included in the one or more candidate cells, or between any two cells included in the one or more candidate cells.

In a fifth aspect, a RAN node is configured to transmit an RRC message containing a configuration of one or more candidate cells for LTM to a radio terminal via an initial source cell of the LTM. The RRC message indicates, in addition to an LTM candidate identifier or cell set identifier associated with each of the one or more candidate cells, an LTM candidate identifier or cell set identifier associated with the initial source cell of the LTM.

In a sixth aspect, a method performed by the RAN node includes transmitting an RRC message containing a configuration of one or more candidate cells for LTM to a radio terminal via an initial source cell of the LTM. The RRC message indicates, in addition to an LTM candidate identifier or cell set identifier associated with each of the one or more candidate cells, an LTM candidate identifier or cell set identifier associated with the initial source cell of the LTM.

In a seventh aspect, a radio terminal is configured to receive an RRC message containing a configuration of one or more candidate cells for LTM from a RAN node via an initial source cell of the LTM. The RRC message indicates, in addition to an LTM candidate identifier or cell set identifier associated with each of the one or more candidate cells, an LTM candidate identifier or cell set identifier associated with the initial source cell of the LTM.

In an eighth aspect, a method performed by a radio terminal includes receiving an RRC message containing a configuration of one or more candidate cells for LTM from a RAN node via an initial source cell of the LTM. The RRC message indicates, in addition to an LTM candidate identifier or cell set identifier associated with each of the one or more candidate cells, an LTM candidate identifier or cell set identifier associated with the initial source cell of the LTM.

In a ninth aspect, a radio terminal is configured to receive an RRC message containing a configuration of one or more candidate cells for LTM from a RAN node. The radio terminal is configured to, if a radio link failure or LTM failure is detected before an LTM cell switch from a source cell to any of the one or more candidate cells is completed after receiving the RRC message, and one of the one or more candidate cells is selected in a cell selection, perform an LTM cell switch by applying the configuration associated with the selected cell.

In a tenth aspect, a method performed by a radio terminal includes receiving an RRC message containing a configuration of one or more candidate cells for LTM from a RAN node. Additionally, the method includes, if a radio link failure or LTM failure is detected before an LTM cell switch from a source cell to any of the one or more candidate cells is completed after receiving the RRC message, and one of the one or more candidate cells is selected in a cell selection, performing an LTM cell switch by applying the configuration associated with the selected cell.

In an eleventh aspect, an apparatus configured to operate as a CU-CP of a RAN node is configured to send a control message to a CU-UP of the RAN node indicating whether a full MAC reset or a partial MAC reset is to be applied to switching of a serving cell of a radio terminal by LTM.

In a twelfth aspect, a method performed by an apparatus configured to operate as a CU-CP of a RAN node includes sending a control message to a CU-UP of the RAN node indicating whether a full MAC reset or a partial MAC reset is to be applied to switching of a serving cell of a radio terminal by LTM.

In a thirteenth aspect, an apparatus configured to operate as a CU-UP of a RAN node is configured to receive a control message from a CU-CP of the RAN node indicating whether a full MAC reset or a partial MAC reset is to be applied to switching of a serving cell of a radio terminal by LTM.

In a fourteenth aspect, a method performed by an apparatus configured to operate as a CU-UP of a RAN node includes receiving a control message from a CU-CP of the RAN node indicating whether a full MAC reset or a partial MAC reset is to be applied to switching of a serving cell of a radio terminal by LTM.

In a fifteenth aspect, a program includes a set of instructions (software code) that, when loaded into a computer, causes the computer to perform the method according to the second, fourth, sixth, eighth, tenth, twelfth, or fourteenth aspect described above.

### Advantageous Effects of Invention

According to the aspects described above, it is possible to provide apparatuses, methods, and programs that contribute to solving at least one of a plurality of problems, including the problems described above.

### Brief Description of Drawings

Fig. 1 shows an example configuration of a radio communication system related to one or more example embodiments.
Fig. 2 shows an example configuration of a radio communication system related to one or more example embodiments.
Fig. 3 shows an example of a signaling procedure for LTM related to one or more example embodiments.
Fig. 4 is a flowchart showing an example of the operation of a candidate DU related to one or more example embodiments.
Fig. 5 is a flowchart showing an example of the operation of a candidate DU related to one or more example embodiments.
Fig. 6 is a sequence diagram showing an example of signaling between a CU and a candidate DU related to one or more example embodiments.
Fig. 7 is a flowchart showing an example of the operation of a candidate DU related to one or more example embodiments.
Fig. 8A is a sequence diagram showing an example of signaling between a CU and a candidate DU related to one or more example embodiments.
Fig. 8B is a sequence diagram showing an example of signaling between a CU, a source DU, and a candidate DU related to one or more example embodiments.
Fig. 9 is a flowchart showing an example of the operation of a candidate DU related to one or more example embodiments.
Fig. 10 is a sequence diagram showing an example of signaling between a CU and a candidate DU related to one or more example embodiments.
Fig. 11 is a flowchart showing an example of the operation of a candidate DU related to one or more example embodiments.
Fig. 12 is a sequence diagram showing an example of signaling between a CU and a candidate DU related to one or more example embodiments.
Fig. 13 is a flowchart showing an example of the operation of a candidate DU related to one or more example embodiments.
Fig. 14 is a sequence diagram showing an example of signaling between a CU and a candidate DU related to one or more example embodiments.
Fig. 15 is a sequence diagram showing an example of signaling between a gNB and a UE related to one or more example embodiments.
Fig. 16 shows an example format of an LTM-CandidateConfig information element related to one or more example embodiments.
Fig. 17 is a sequence diagram showing an example of signaling between a gNB and a UE related to one or more example embodiments.
Fig. 18 is a flowchart showing an example of the operation of a UE related to one or more example embodiments.
Fig. 19 is a sequence diagram showing an example of signaling between a CU-CP and a CU-UP related to one or more example embodiments.
Fig. 20 is a block diagram showing example configurations of a gNB-CU, a gNB-CU-CP, a gNB-CU-UP, and a gNB-DU related to one or more example embodiments.
Fig. 21 is a block diagram showing an example configuration of a UE related to one or more example embodiments.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be implemented independently or in any suitable combination. These multiple example embodiments have novel features that differ from one another. Accordingly, these multiple example embodiments contribute to achieving different objectives or solving different problems and contribute to achieving different advantages.

Each of the drawings or figures is merely an example to illustrate one or more example embodiments. Each figure may not be associated with only one particular example embodiment but may be associated with one or more other example embodiments. As will be appreciated by those of ordinary skill in the art, various features or steps described with respect to any one of the figures may be combined with features or steps illustrated in one or more other figures to produce, for example, example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

The following example embodiments are described primarily with respect to the 3GPP Long Term Evolution (LTE) system and the 5th generation mobile communication system (5G system). However, these example embodiments can be applied to other radio communication systems that support technologies similar to 3GPP LTM. The term LTE as used herein includes improvements and enhancements to LTE and LTE-Advanced to enable interworking with 5G systems, unless otherwise specified.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

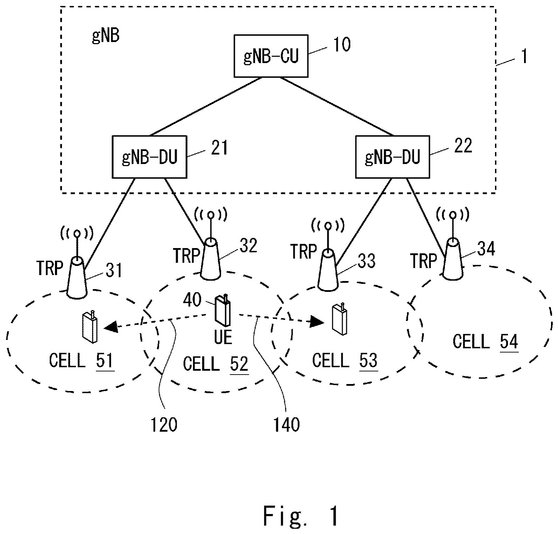

First, the configuration and operation of a plurality of network elements common to a plurality of example embodiments are described. Fig. 1 shows an example configuration of a radio communication system related to a plurality of example embodiments. In the example of Fig. 1, the radio communication system includes a gNB-CU 10, gNB-DUs 21 and 22, TRPs 31 to 34, and a UE 40. The UE 40 may be referred to as radio terminal 40. Each element (or network function) shown in Fig. 1 can be implemented, for example, as a network element on dedicated hardware, as a software instance running on dedicated hardware, or as a virtualized function instantiated on an application platform.

The gNB-CU 10 and gNB-DUs 21 and 22 correspond to a single gNB (gNB 1). In other words, the gNB 1 includes the gNB-CU 10 and the gNB-DUs 21 and 22. Alternatively, the gNB 1 includes the gNB-CU 10 and the gNB-DUs 21 and 22, as well as the TRPs 31 to 34. The gNB 1 is a Next Generation Radio Access Network (NG-RAN) node. The gNB 1 may be referred to as a radio access network (RAN) node, base station, radio station, or access point. Each of the gNB-CU 10, gNB-DUs 21 and 22, and TRPs 31 to 34 may also be referred to as a RAN node.

The gNB 1 may be an en-gNB. An en-gNB is a node that provides NR user plane and control plane protocol termination to a UE and operates as a secondary node for E-UTRA-NR Dual Connectivity (EN-DC).

The gNB-CU 10 is a logical node that controls the operation of one or more gNB-DUs (e.g., gNB-DUs 21 and 22). The gNB-CU 10 hosts the RRC, Service Data Adaptation Protocol (SDAP), and PDCP protocols (or the RRC and PDCP protocols) of the gNB 1. If the gNB 1 is an en-gNB, the gNB-CU 10 hosts the RRC and PDCP protocols of the en-gNB. The gNB-CU 10 may include a Control Plane (CP) Unit (i.e., gNB-CU-CP) and one or more User Plane (UP) Units (i.e., gNB-CU-UPs).

Each of the gNB-DUs 21 and 22 is a logical node that hosts the RLC and MAC layers of a gNB and part of the PHY layer of a gNB, i.e., the high PHY layer. The remaining PHY layer signaling, i.e., the low PHY layer, is located in the TRPs 31 to 34. A gNB-DU supports one or more cells. A cell is supported by only one gNB-DU. In the example in Fig. 1, the gNB-DU 21 is connected to the TRPs 31 and 32, while the gNB-DU 22 is connected to the TRPs 33 and 34. The TRPs 31 to 34 provide different cells 51 and 54, respectively. In other words, the gNB-DU 21 provides a plurality of cells 51 and 52, and the TRPs 31 and 32 correspond to cells 51 and 52, respectively. Similarly, the gNB-DU 22 provides a plurality of cells 53 and 54, and the TRPs 33 and 34 correspond to cells 53 and 54, respectively.

Each of the TRPs 31 to 34 can communicate with the UE 40 using beams. The TRPs 31 to 34 may be referred to as Radio Units (RUs) or Remote Radio Heads (RRHs). Each of the TRPs 31 to 34 provides low PHY layer signal processing and analog Radio Frequency (RF) signal processing. Each TRP contains or is connected to one or more antenna arrays. Each TRP has a plurality of RF chains equal to or less than the total number of antenna elements in the one or more antenna arrays. Each TRP also includes a Digital Front End (DFE). The DFE provides low PHY layer signal processing and digital radio signal processing. The low PHY layer signal processing includes, for example, fast Fourier transform (FFT) and inverse FFT (IFFT). The low PHY layer signal processing may also include Cyclic Prefix (CP) addition and removal, and may include Physical RACH (PRACH) extraction or filtering. The digital radio signal processing may include, for example, digital pre-distortion (DPD), crest factor reduction (CFR), digital up conversion (DUC), digital down conversion (DDC), and transmit/receive baseband channel filter. The DFE may perform digital baseband precoding for beamforming. If a hybrid beamforming scheme is used, an analog beamformer circuit or analog precoder (e.g., phase shifter matrix) may be placed between the one or more antenna arrays and the multiple RF chains.

The interface between the gNB-CU 10 and each of the gNB-DUs 21 and 22 is an F1 interface. A direct interface, connection, or backhaul can be provided to connect the gNB-DU 21 and the gNB-DU 22. Similarly, a direct interface, connection, or backhaul can be provided to communicatively connect two TRPs serving neighbor cells, e.g., between the TRPs 31 and 32, between the TRPs 32 and 33, and between the TRPs 33 and 34.

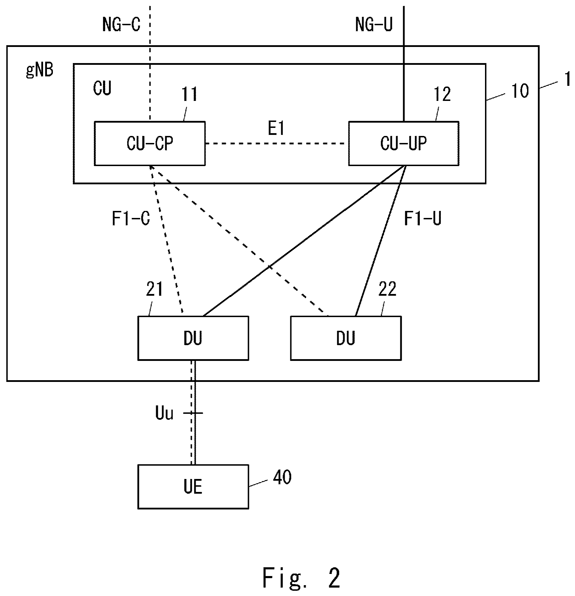

Fig. 2 shows an example configuration of the gNB 1. In the example shown in Fig. 2, the gNB-CU 10 includes a gNB-CU-CP 11 and one or more gNB-CU UP 12. The gNB-CU-CP 11 is a logical node that hosts the control plane portion of the RRC and PDCP protocols of the gNB-CU 10. The gNB-CU-CP 11 terminates an E1 interface connected to each gNB-CU-UP and an F1-C interface connected to each gNB-DU. The E1 interface uses the E1 Application Protocol (E1AP). The F1-C interfaces use the F1 Application Protocol (F1AP). Additionally, the gNB-CU-CP 11 terminates an NG-C interface connected to a control plane node (i.e., Access and Mobility Management Function (AMF)) within a core network.

The gNB-CU-UP 12 is a logical node that hosts the user plane portion of the PDCP protocol of the gNB-CU 10 for en-gNB, or the SDAP protocol and the user plane portion of the PDCP protocol of the gNB-CU 10 for gNB. The gNB-CU-UP 12 terminates the E1 interface connected to the gNB-CU-CP 11 and an F1-U interface connected to each gNB-DU. The F1-U interface uses the General Packet Radio Service Tunneling Protocol User Plane (GTP-U) tunnel. Additionally, the gNB-CU-UP 12 terminates an NG-U interface connected to a user plane node (i.e., User Plane Function (UPF)) in the core network.

The gNB 1 and the UE 40 support LTM. LTM is a procedure in which the gNB 1 receives L1 measurement reports from the UE 40 and, based on these reports, changes one or more serving cells (e.g., cell group) of the UE 40 through L1 or L2 signaling (e.g., MAC CE). The gNB 1 prepares one or more candidate cells and provides the candidate cell configurations to the UE 40 via an RRC message. Then, the gNB 1 triggers an LTM cell switch by selecting one of the candidate cell configurations as the target configuration for LTM. The candidate cell configurations can be added, modified, or released only by the network (i.e., the gNB 1) via RRC signals. However, as an exception, the UE 40 may autonomously release or remove at least a portion of the candidate cell configuration only under specified situations or only if specified conditions are met.

An LTM candidate cell configuration may be provided on top of a reference configuration or as a delta configuration relative to the reference configuration. The reference configuration is managed separately from the delta configuration of each candidate cell, and the UE 40 stores the reference configuration as a configuration separate from each candidate cell's delta configuration. The user plane is continued without reset whenever possible (e.g., intra-DU) to avoid data loss and an additional delay of data recovery. Security is not updated in LTM (or LTM execution). Subsequent LTM between candidate cells (i.e., the UE 40 does not release other candidate cell configurations after LTM is triggered) can be performed without RRC reconfiguration.

LTM supports both intra-DU mobility within a gNB-DU and intra-gNB-CU inter-gNB-DU mobility between gNB-DUs within a gNB-CU. LTM supports not only intra-frequency mobility but also inter-frequency mobility. LTM supports the following scenarios: PCell change in non- CA scenario; PCell change without SCell change in CA scenario; PCell change with SCell change in CA scenario; and Dual Connectivity scenario. The PCell change with SCell change in CA scenario includes a) cases where the target PCell or target SCell(s) is not a current serving cell (i.e., CA-to-CA scenario with PCell change), b) cases where the target PCell is a current SCell, and c) cases where the target SCell is the current PCell. The Dual Connectivity scenario includes at least the PSCell change without MN involvement case.

The mobility 120 shown in Fig. 1 is an intra-DU LTM. Specifically, the UE 40 moves from a beam in the cell 52 of the TRP 32 to a beam in the cell 51 of the TRP 31 associated with the same gNB-DU 21. In contrast, the mobility 140 shown in Fig. 1 is an inter-DU LTM. Specifically, the UE 40 moves from a beam in the cell 52 of the TRP 32 associated with the gNB-DU 21 to a beam in the cell 53 of the TRP 33 associated with the different gNB-DU 22.

Before and after LTM, the termination points of the radio bearers (e.g., Signaling Radio Bearers (SRBs), Data Radio Bearers (DRBs)) for the UE 40 are fixed and unchanged at the gNB-CU 10. After an LTM cell switch, one or more QoS flows belonging to the PDU Session of the UE 40 still pass through the same gNB-CU 10 (e.g., gNB-CU-UP), as they did before the cell switch. Accordingly, the radio bearer configuration at the UE 40 and the gNB 1 (i.e., gNB-CU 10, or gNB-CU 10 and (target) gNB-DU 21 or 22) can be retained or maintained before and after LTM. Alternatively, the target gNB-DU (e.g., gNB-DU 22) or the gNB-CU 10 may transmit the radio bearer configuration for the target cell to the UE 40 via the source gNB-DU (e.g., gNB-DU 21) during the LTM Preparation. If the UE 40 does not receive an explicit radio bearer configuration from the gNB (e.g., gNB-CU 10 or target gNB-DU) to be used after the LTM cell switch, it may inherit the radio bearer configuration in the serving cell to the target cell after the LTM cell switch. In other words, the UE 40 may continue to use the radio bearer configuration in the serving cell for the target cell after the LTM cell switch.

The following provides a more detailed description of the handling of the control plane for LTM. A cell switch command (or cell switch trigger information) sent by the gNB 1 to the UE 40 may be conveyed by a MAC CE. This MAC CE includes, at a minimum, a candidate configuration index associated with the target cell selected by the gNB 1 from one or more prepared LTM candidate cells. The candidate configuration index may be an LTM candidate ID. The LTM candidate ID may be referred to as an (LTM) candidate ID, (LTM) candidate index, (LTM) configuration ID, (LTM) configuration index, (LTM) candidate configuration ID, or (LTM) candidate configuration index. One or more SCells associated with the candidate configuration may be activated simultaneously with the LTM triggered by the MAC CE. The UE 40 may perform contention-based random access (CBRA) or contention-free random access (CFRA) upon the cell switching. If acquiring the timing advance (TA) of the target cell is unnecessary upon cell switching, the UE 40 may skip the random access procedure. The random access channel (RACH) resources for CFRA are provided through an RRC configuration.

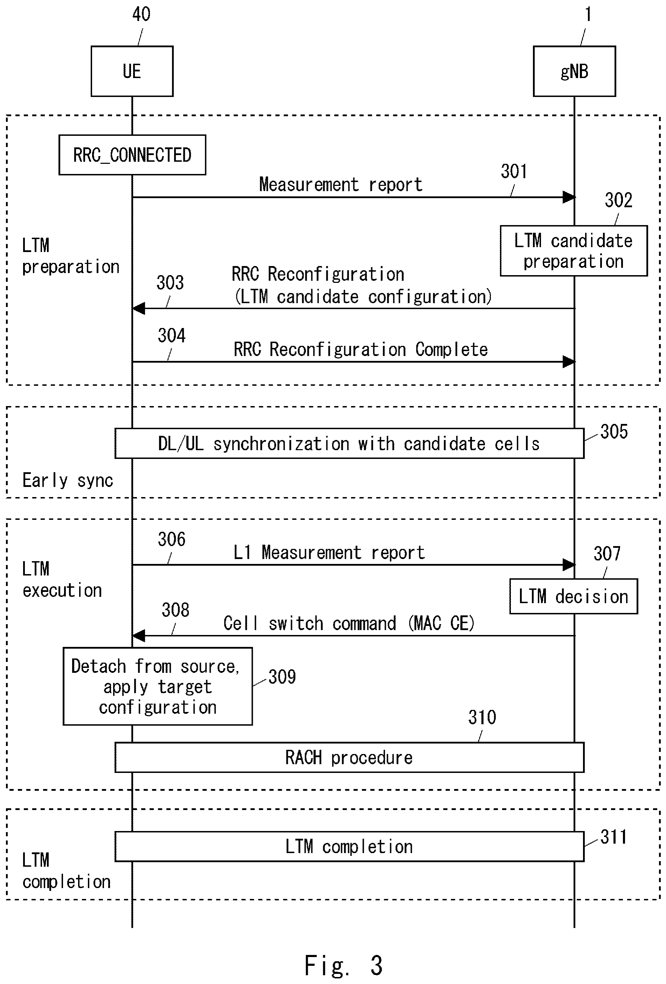

Fig. 3 illustrates the overall LTM procedure. Subsequent LTMs are performed by repeating the early synchronization, LTM execution, and LTM completion steps without releasing other candidates (or candidate cell configurations) after each LTM is completed. The purpose of early synchronization is to allow the UE 40 to synchronize with the candidate cells before the LTM execution phase and skip the random access procedure in the LTM execution phase. However, early synchronization is optional and does not necessarily have to be performed.

Steps 301 to 304 correspond to the LTM preparation phase. In step 301, the UE 40 in the RRC_CONNECTED state transmits an L3 measurement report to the gNB 1. Specifically, the UE 40 transmits a MeasurementReport message to the gNB 1. The MeasurementReport message indicates L3 measurement results. The MeasurementReport message may indicate measurement results of the serving cell and neighbor cells. The measurement results of each cell include Reference Signal Received Power (RSRP), Reference Signal Received Quality (RSRQ), Signal-to-Interference and Noise Ratio (SINR), or any combination thereof. In step 302, based on the L3 measurement report, the gNB 1 determines the use of LTM and starts preparing one or more LTM candidate cells. The LTM candidate cells may be referred to as LTM candidate target cells. In step 303, the gNB 1 transmits an RRCReconfiguration message including the configuration of one or more LTM candidate cells to the UE 40. In step 304, the UE 40 stores the configuration of one or more LTM candidate cells and transmits an RRCReconfigurationComplete message to the gNB 1.

Step 305 corresponds to the early synchronization phase. The UE 40 may perform downlink (DL) synchronization and TA acquisition with the one or more candidate cells before receiving an LTM cell switch command.

Steps 306 to 310 correspond to the LTM execution phase. In step 306, the UE 40 performs L1 measurements for the configured LTM candidate cells and sends lower layer measurement reports to the gNB 1. The lower layer measurement reports may be carried by L1 signaling (e.g., Uplink Control Information (UCI)) or a MAC CE. In step 307, the gNB 1 decides to execute an LTM cell switch to one of the prepared candidate cells and sends an LTM cell switch command including an identifier (e.g., LTM candidate ID) of the target cell to the UE 40. The LTM cell switch command may be a MAC CE that triggers an LTM cell switch by including the LTM candidate ID of the target cell. In step 309, the UE 40 switches to the configuration of the target cell specified by the gNB 1. In other words, the UE 40 detaches from the source cell and applies the cell configuration of the target cell. In step 310, if the TA is not available, the UE 40 performs a random access procedure toward the target cell.

Step 311 corresponds to the LTM completion phase. The UE 40 indicates to the gNB 1 that the LTM cell switch to the target cell has been successfully completed.

Next, the handling of the user plane for LTM is explained, with a focus on the MAC reset. In LTM, the network (i.e., gNB 1) explicitly controls whether the UE 40 performs a partial MAC reset or a full MAC reset upon cell switching. Similarly, the network (i.e., gNB 1) explicitly controls whether the UE 40 reestablishes the RLC and whether the UE 40 performs data recovery by the PDCP upon cell switching. In intra-DU LTM, the UE 40 can perform a partial MAC reset, instead of a full MAC reset as performed in L3 mobility. In a full MAC reset, the UE 40 performs a plurality of operations including initialization of one or more parameters, cancellation of one or more triggered processes, and flushing of one or more buffers. In contrast, in a partial MAC reset, the UE 40 performs only some of the plurality of operations performed in a full MAC reset. In an example, a partial MAC reset may skip one or more of the following operations: canceling a triggered Buffer Status Report (BSR); initializing variable Bj to zero for each logical channel, flushing a hybrid automatic repeat request (HRAQ) soft buffer, setting a New Data Indicator (NDI) to zero for an uplink HARQ process, and canceling a triggered Recommended bit rate query procedure. Variable Bj is managed for each logical channel for logical channel prioritization (LCP) and is incremented by the product of the Prioritized Bit Rate (PBR) and variable T each time the LCP procedure is performed. Variable T is the time that has elapsed since Bj was last incremented.

According to the current agreement in the 3GPP, during LTM cell switching, the UE 40 determines whether to perform a full MAC reset or a partial MAC reset based on an RRC configuration (e.g., cell set, identification information assigned to each candidate cell). In other words, an LTM configuration (e.g., step 303 in Fig. 3) provided to the UE 40 by the gNB 1 (or the gNB-CU 10) indicates to the UE 40 whether a full MAC reset is required during a serving cell change between any two candidate cells, in addition to the configuration of one or more candidate cells. One method involves the gNB 1 sending information about one or more sets of cells (e.g., a list of cell sets) to the UE 40. In a set of cells, each candidate cell can be identified using an LTM candidate ID, a cell ID, or a combination of a PCI and an SSB frequency. A set of cells may also be referred to as a group of cells. Similarly, a list of cell sets may also be referred to as a list of cell groups.

Another method uses a set ID to indicate a set of cells for which a partial MAC reset is possible. In this case, the gNB 1 indicates the set ID for each LTM candidate cell or for each LTM candidate configuration (e.g., for each LTM candidate ID). Alternatively, the gNB 1 may add an identifier different from the set ID for each LTM candidate cell, and the UE 40 may make a determination regarding the MAC reset by comparing the identifier of the serving cell with the identifier of the LTM candidate cell. The comparison of the identifiers for determining the MAC reset may be performed by determining whether the two identifiers are the same. For example, if the two identifiers are identical, the UE 40 may understand that a partial MAC reset is required for the LTM cell switch to the LTM candidate cell. Conversely, if the two identifiers are different, the UE 40 may understand that a full MAC reset is required for the LTM cell switch to the LTM candidate cell. Alternatively, the comparison of the identifiers for determining the MAC reset may be performed by determining whether the two identifiers are in a predetermined relationship. For example, if the two identifiers are in a predetermined relationship, the UE 40 may understand that a partial MAC reset is required for the LTM cell switch to the LTM candidate cell. Conversely, if the two identifiers are not in a predetermined relationship, the UE 40 may understand that a full MAC reset is required for the LTM cell switch to the LTM candidate cell.

Although different from the current agreement in the 3GPP, in other implementations, the UE 40 may receive an indication of whether a full MAC reset or a partial MAC reset is to be performed via a cell switch command (e.g., step 308 in Fig. 3).

### First Example Embodiment

Example configurations of a radio communication system according to the present example embodiment are the same as those described with reference to Fig. 1 and Fig. 2. This example embodiment relates to signaling between the gNB-CU 10 and a candidate gNB-DU (e.g., gNB-DU 22) during LTM preparation. This example embodiment provides details of signaling for a candidate gNB-DU to inform the gNB-CU 10 whether a full MAC reset or a partial MAC reset is to be applied.

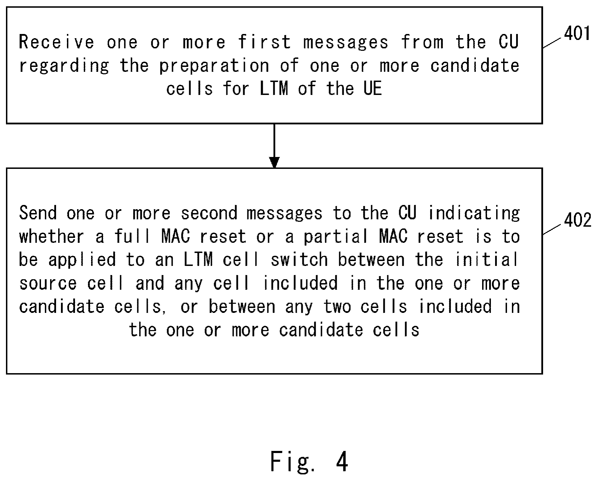

Fig. 4 shows an example of the operation of a candidate DU (e.g., gNB-DU 22) of LTM. In step 401, the candidate DU receives one or more first messages from the gNB-CU 10 regarding the preparation of one or more candidate cells for LTM of the UE 40. The one or more first messages may be one or more UE CONTEXT SETUP REQUEST messages. In some implementations, the CU 10 may use a single UE Context Setup procedure to prepare multiple LTM candidate cells. In this case, the CU 10 sends a single first message or UE CONTEXT SETUP REQUEST message to the candidate DU, requesting the configuration of multiple LTM candidate cells. In other implementations, the CU 10 uses multiple UE Context Setup procedures, each relating to one LTM candidate cell, to prepare multiple LTM candidate cells. In this case, the CU 10 sends multiple first messages or UE CONTEXT SETUP REQUEST messages, each requesting the configuration of one LTM candidate cell, to the candidate DU.

In step 402, in response to receiving the one or more first messages, the candidate DU sends one or more second messages to the CU 10. The one or more second messages may be one or more UE CONTEXT SETUP RESPONSE messages. In some implementations, in response to a single first message requesting the configuration of multiple LTM candidate cells, the candidate DU sends a single second message indicating the configuration of multiple LTM candidate cells to the CU 10. In other implementations, in response to multiple first messages, each relating to one LTM candidate cell, the candidate DU sends multiple second messages, each indicating the configuration of one LTM candidate cell, to the CU 10.

The one or more second messages sent in step 402 include information indicating whether a full MAC reset or a partial MAC reset is to be applied to an LTM cell switch between the initial source cell of the LTM and any cell included in the one or more candidate cells, or between any two cells included in the one or more candidate cells. Alternatively, the one or more second messages include information that allows the gNB-CU 10 to determine whether a full MAC reset or a partial MAC reset is to be applied to an LTM cell switch.

For example, the one or more second messages may indicate one or more sets of candidate cells to which a partial MAC reset is to be applied. Each set includes one or more candidate cells. A set of candidate cells indicates multiple cells for which the UE 40 does not need to perform a full MAC reset upon an LTM cell switch between them. In other words, if an LTM cell switch is performed between multiple cells indicated by a single cell set, the UE 40 applies a partial MAC reset.

In another example, the second message may indicate information about a set (e.g., set ID) for each candidate cell. The gNB-CU 10 may understand that a partial MAC reset is to be applied to an LTM cell switch between candidate cells associated with the same set information (e.g., the same set ID). Conversely, the gNB-CU 10 may determine that a full MAC reset is to be applied to an LTM cell switch between candidate cells associated with different set information (e.g., different set IDs).

In a further example, the one or more second messages may indicate one or more candidate cells to which a full MAC reset is applied.

According to the operation described with reference to Fig. 4, the candidate DU can inform the CU 10 whether a full MAC reset or a partial MAC reset is to be applied during an LTM cell switch with respect to a candidate cell that it provides.

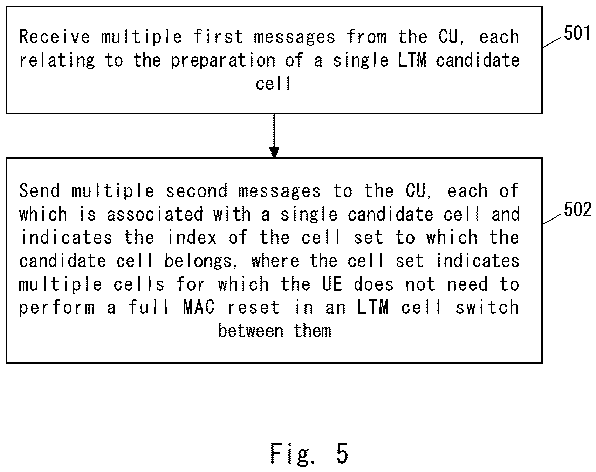

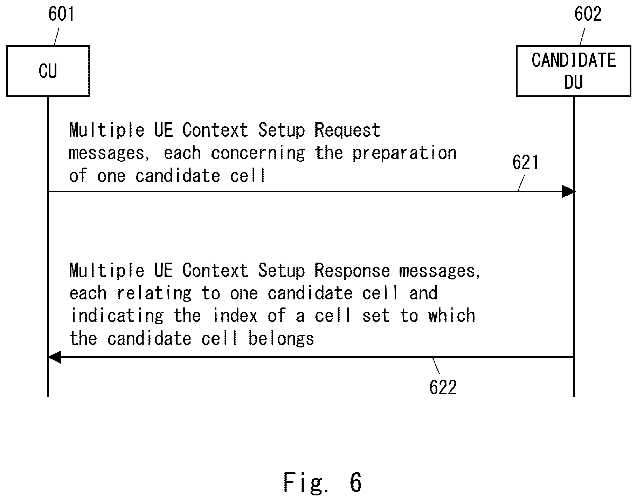

Fig. 5 shows an example of the operation of a candidate DU (e.g., gNB-DU 22) of LTM. The operation shown in Fig. 5 is one specific example of the operation described with reference to Fig. 4. Fig. 6 shows an example of signaling between a CU and a candidate DU related to Fig. 5. In steps 501 and 621, a candidate DU 602 (e.g., gNB-DU 22) receives a plurality of first messages from a CU 601 (e.g., gNB-CU 10), each relating to the preparation of an LTM candidate cell. The plurality of first messages may be a plurality of UE CONTEXT SETUP REQUEST messages. In steps 502 and 622, the candidate DU 602 sends the plurality of second messages to the CU 601. The plurality of second messages may be a plurality of UE CONTEXT SETUP RESPONSE messages.

Each of the plurality of second messages transmitted in steps 502 and 622 is associated with a respective one of the plurality of candidate cells and indicates an index of a cell set to which the candidate cell belongs. A cell set indicates a plurality of cells for which the UE 40 does not need to perform a full MAC reset upon an LTM cell switch between them. In other words, a cell set indicates a plurality of cells for which the UE 40 is required to perform a partial MAC reset upon an LTM cell switch between them. The index of a cell set may be referred to as a cell set index, set index, cell set ID, or set ID.

The index of the cell set to which the initial source cell belongs may be a predefined value (e.g., zero). Specifically, the index of the cell set to which the initial source cell belongs may be predefined in 3GPP specifications. For example, in the case of intra-DU LTM, the candidate DU 602 (here the same as the source DU) may use a default value as the index of the cell set to which the initial source cell belongs. The candidate DU 602 (here the same as the source DU) may set the default value of the cell set index to which the initial source cell belongs, in a second message concerning a candidate cell to which a partial MAC reset can be applied in an LTM cell switch from the initial source cell. To notify the UE 40 of the set of cells to which the initial source cell belongs and for which a partial MAC reset is possible, the CU 601 may use a default value (e.g., zero) as the set ID (or index) of this cell set. The UE 40 may consider (or assume) that the set ID (or index) of the set of cells to which the initial source cell belongs is the default value (e.g., zero). If the set ID of a candidate cell indicated in an LTM configuration is the default value, the UE 40 may recognize that a partial MAC reset is required for a cell switch from the initial source cell to this candidate cell. Using information about the cell set, this allows the UE 40 to determine whether a partial MAC reset is required upon an LTM cell switch from the initial source cell to another candidate cell, even though the initial source cell is not configured as a candidate cell.

Alternatively, the candidate DU 602 (here the same as the source DU) of the intra-DU LTM may determine the index of the cell set to which the initial source cell belongs. The candidate DU 602 (here the same as the source DU) may set, in a second message concerning a candidate cell to which a partial MAC reset can be applied for an LTM cell switch from the initial source cell, information indicating that the cell set is also associated with the initial source cell, in addition to the index of the cell set. In sending an LTM configuration containing the configuration of each candidate cell, including the cell set index or set ID of each candidate cell, to the UE 40, the CU 601 may also inform the UE 40 of the cell set index or set ID to which the initial source cell belongs. The UE 40 may recognize that a partial MAC reset is required for a cell switch from the initial source cell to a candidate cell if the set ID of the candidate cell is the same as the set ID of the initial source cell.

There may be one or more candidate cells that do not belong to any cell set. Such candidate cells are cells to which a full MAC reset is applied. A second message regarding a candidate cell to which a full MAC reset is applied need not indicate a cell set index. Alternatively, a predefined cell set index indicating that a full MAC reset is applied may be specified, and a second message concerning a candidate cell to which a full MAC reset is applied may indicate the same. A second message regarding a candidate cell to which a full MAC reset is applied may contain an indication that a full MAC reset is applied to the candidate cell.

The CU 601 identifies a set of candidate cells having the same cell set index and may include a list of one or more cell sets in an LTM configuration to be sent to the UE 40. In a set of cells, an LTM candidate ID, a cell ID, or a combination of a PCI and an SSB frequency may be used to identify each candidate cell. A cell set to which the initial source cell and one or more candidate cells belong may indicate (or may include) an identifier (e.g., LTM candidate ID, cell ID), or a combination of a PCI and an SSB frequency, associated with the initial source cell. Another method uses a set ID to inform the UE 40 of a set of cells for which a partial MAC reset is possible. The set ID communicated to the UE 40 may be the same as the cell set index indicated in the second message, or may be generated by the CU 601 based on the cell set index indicated in the second message. The set ID of the cell set to which the initial source cell and one or more candidate cells belong may be a default value. Alternatively, as described above, the CU 601 may transmit the set ID of the cell set to which the initial source cell belongs to the UE 40, either together with or included in the LTM configuration.

Alternatively, in a case where the CU 601 instructs the UE 40 to perform an LTM execution between cells having the same cell set index, the CU 601 may include a partial MAC reset indication in the cell switch command (e.g., MAC CE).

In some implementations, the cell set index included in a second message sent in steps 502 and 622 is unique only within the candidate DU 602. In this case, the CU 601 may identify the cell set uniquely among multiple candidate DUs based on the combination of the DU ID of the candidate DU 602 and the cell set index. The CU 601 may generate the set ID communicated to the UE 40 based on the cell set index indicated in the second message.

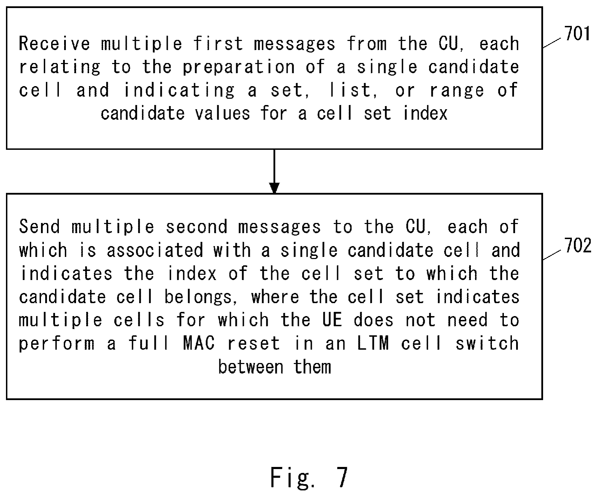

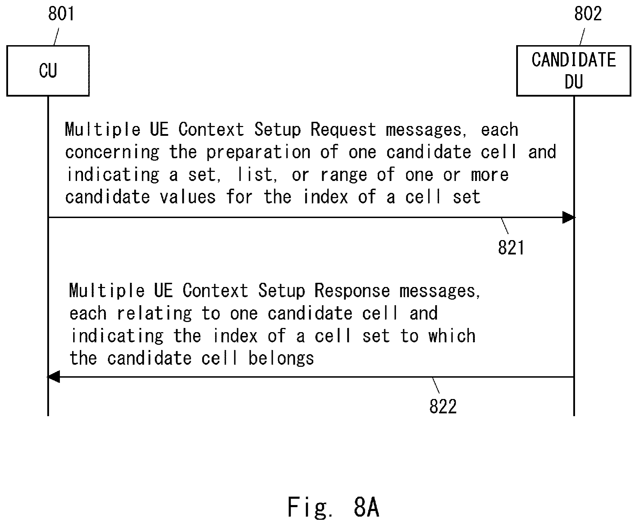

In other implementations, the cell set index included in a second message transmitted in steps 502 and 622 is unique among multiple candidate DUs within the same CU 601. This allows the RRC layer of CU 601 to send the cell set index included in the second message to the UE 40 without modification. To ensure that the cell set index included in each second message is unique among multiple DUs, the CU 601 may indicate to each of the multiple candidate DUs a different set, list, or range of candidate cell set index values. The CU 601 may provide the set, list, or range of candidate cell set index values to the candidate DU 602 via one or more first messages transmitted in steps 501 and 621. Fig. 7 and Fig. 8A illustrate the operation of the CU and candidate DU in this regard.

Steps 701 and 821 are similar to steps 501 and 621. That is, in steps 701 and 821, a candidate DU 802 (e.g., gNB-DU 22) receives a plurality of first messages, each relating to the preparation of a candidate LTM cell, from a CU 801 (e.g., gNB-CU 10). Additionally, each first message indicates a set, list, or range of candidate values for the cell set index. The CU 801 provides a different set, list, or range of candidate values for the cell set index to each of the multiple candidate DUs.

Steps 702 and 822 are similar to steps 502 and 622. In steps 702 and 822, the candidate DU 602 sends multiple second messages to the CU 601. Each of the second messages is associated with a respective one of the candidate cells and indicates an index of the cell set to which the candidate cell belongs. The candidate DU 802 selects, from the set, list, or range of candidate values specified by the first messages received in steps 701 and 821, an index of the cell set contained in each of the second messages.

As explained with reference to Figs. 5 and 6, the index of the cell set to which the initial source cell belongs may be a predefined value (e.g., zero). Alternatively, the candidate DU 802 (here the same as the source DU) of the intra-DU LTM may determine the index of the cell set to which the initial source cell belongs.

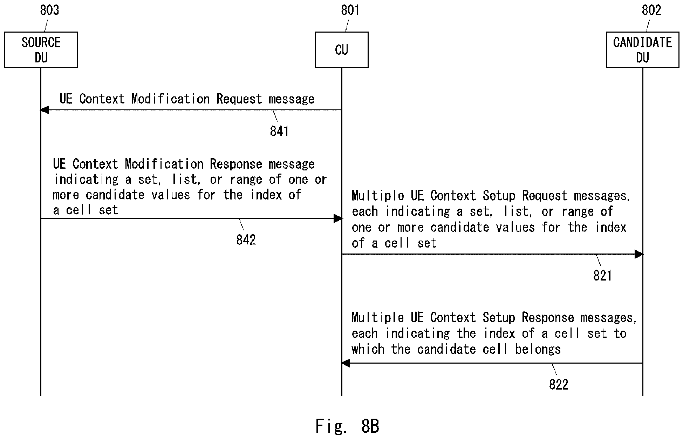

The CU 801 may receive a second set, list, or range of candidate cell set Index values from the source DU (e.g., gNB-DU 21) that provided the initial source cell of LTM. Then, the CU 801 may determine the (first) set, list, or range of candidate values to be indicated to each candidate DU from the second set, list, or range of candidate values received from the source DU. Fig. 8B shows a modification of the procedure shown in Fig. 8A. In step 841, the CU 801 sends a UE Context Modification Request message to a source DU 803. The UE CONTEXT MODIFICATION REQUEST message may indicate that this message is related to LTM preparation. For example, the UE CONTEXT MODIFICATION REQUEST message may include an LTM Preparation Request IE. In step 842, the source DU 803 sends a UE CONTEXT MODIFICATION RESPONSE message to the CU 801. The UE CONTEXT MODIFICATION RESPONSE message indicates a set, list, or range of one or more candidate values for the cell set index. The CU 801 determines the (first) set, list, or range of candidate values to be indicated to the candidate DU 802 from the set, list, or range of candidate values received from the source DU 803. Steps 821 and 822 in Fig. 8B are the same as those in Fig. 8A.

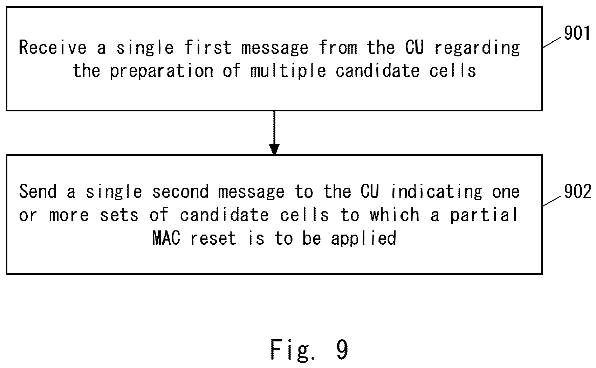

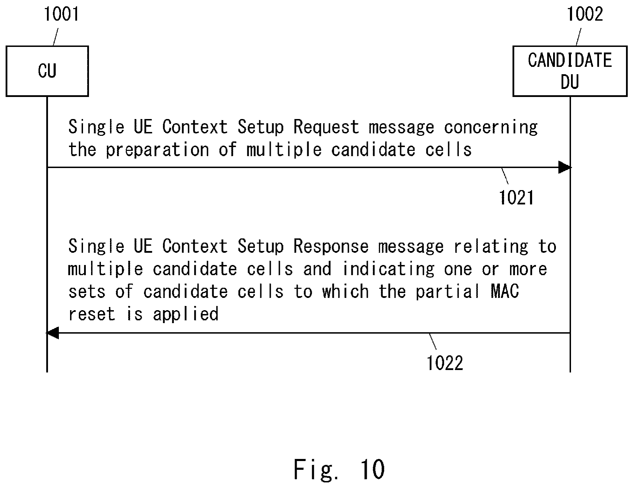

Fig. 9 shows an example of the operation of a candidate DU (e.g., gNB-DU 22) of LTM. The operation shown in Fig. 9 is one specific example of the operation described with reference to Fig. 4. Fig. 10 shows an example of signaling between a CU and a candidate DU related to Fig. 9. In steps 901 and 1021, a candidate DU 1002 (e.g., gNB-DU 22) receives a single first message from a CU 1001 (e.g., gNB-CU 10) regarding the preparation of multiple candidate cells. The first message may be a UE CONTEXT SETUP REQUEST message. In steps 902 and 1022, in response to receiving the single first message, the candidate DU 1002 sends a second message to the CU 1001. The second message may be a UE CONTEXT SETUP RESPONSE message.

The second message transmitted in steps 902 and 1022 indicates the configuration of each of the multiple candidate cells and indicates one or more sets of candidate cells to which a partial MAC reset is applied. As in the previous explanation, one set of candidate cells indicates multiple cells for which the UE 40 does not need to perform a full MAC reset upon an LTM cell switch between them. In other words, one set of candidate cells indicates multiple cells for which the UE 40 needs to perform a partial MAC reset upon an LTM cell switch between them.

In a set of candidate cells, an LTM candidate ID, a cell ID, or a combination of a PCI and an SSB frequency may be used to identify each candidate cell. A cell set to which the initial source cell and one or more candidate cells belong may indicate an LTM candidate ID, a cell ID, or a combination of a PCI and an SSB frequency, associated with the initial source cell. In one example, the second message includes a list of sets of candidate cells, and each entry in the list may define a cell set using a combination of LTM candidate IDs. In this case, the CU 1001 may include the list of sets of candidate cells received from the candidate DU 1002 in the LTM configuration to be sent to the UE 40. The LTM candidate ID associated with the initial source cell may be a default value. Alternatively, the CU 1001 may transmit the LTM candidate ID associated with the initial source cell to the UE 40, either together with or included in the LTM configuration.

In another example, the second message may associate the configuration of a candidate cell or an LTM candidate ID with a cell set index to which the candidate cell belongs. As in the procedures described with reference to Figs. 5, 6, 7, 8A, and 8B, the cell set index may be unique only within the candidate DU 1002 or may be unique among multiple candidate DUs within the same CU 1001. The CU 1001 may identify a set of multiple candidate cells having the same cell set index and include the list of one or more cell sets in the LTM configuration to be sent to the UE 40. Alternatively, the CU 1001 may use the set ID to indicate the set of cells for which a partial MAC reset is possible to the UE 40. The set ID communicated to the UE 40 may be the same as the cell set index indicated in the second message, or may be generated by the CU 1001 based on the cell set index indicated in the second message. The set ID of the cell set to which the initial source cell and one or more candidate cells belong may be a default value. Alternatively, as described above, the CU 1001 may transmit the set ID of the cell set to which the initial source cell belongs to the UE 40, either together with or included in the LTM configuration.

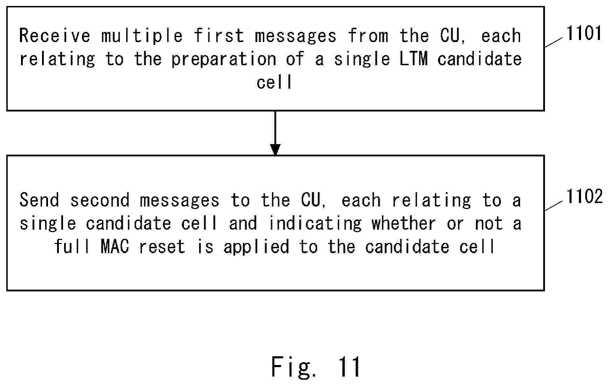

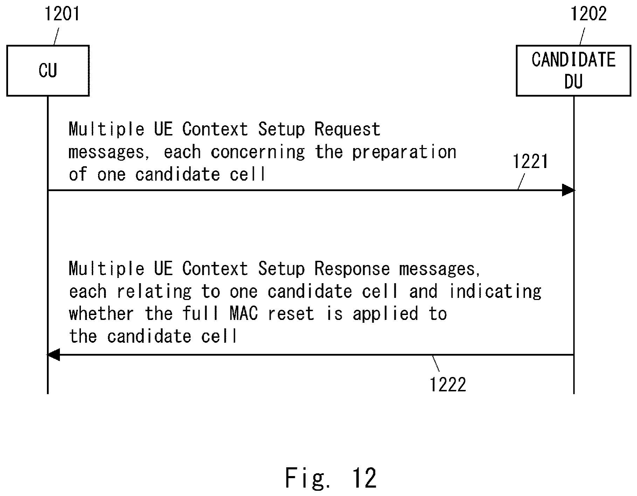

Fig. 11 shows an example of the operation of a candidate DU (e.g., gNB-DU 22) of LTM. The operation shown in Fig. 11 is one specific example of the operation described with reference to Fig. 4. Fig. 12 shows an example of signaling between a CU and a candidate DU related to Fig. 11. In steps 1101 and 1221, a candidate DU 1202 (e.g., gNB-DU 22) receives a plurality of first messages from a CU 1201 (e.g., gNB-CU 10), each relating to the preparation of an LTM candidate cell. The plurality of first messages may be a plurality of UE CONTEXT SETUP REQUEST messages. In steps 1102 and 1222, the candidate DU 1202 sends the plurality of second messages to the CU 1201. The plurality of second messages may be a plurality of UE CONTEXT SETUP RESPONSE messages.

Each of the plurality of second messages transmitted in steps 1102 and 1222 is associated with a respective one of the plurality of candidate cells and indicates whether or not a full MAC reset is applied to the candidate cell. Each second message may contain an indication of whether a full MAC reset or a partial MAC reset is applied to the corresponding candidate cell. If one of the multiple second messages indicates that a full MAC reset is to be applied to a candidate cell, the CU 1201 recognizes that the UE 40 needs to perform a full MAC reset for LTM between that candidate cell and the other candidate cells of the candidate DU 1202. In the case of intra-DU LTM, the CU 1201 also recognizes that the UE 40 needs to perform a full MAC reset for LTM from the initial source cell to that candidate cell. Conversely, if one of the multiple second messages indicates that a partial MAC reset is applied to a candidate cell, the CU 1201 recognizes that the UE 40 needs to perform a partial MAC reset for LTM between that candidate cell and the other candidate cells of the candidate DU 1202 (excluding cells to which a full MAC reset is applied). In the case of intra-DU LTM, the CU 1201 also recognizes that the UE 40 needs to perform a partial MAC reset for LTM from the initial source cell to that candidate cell.

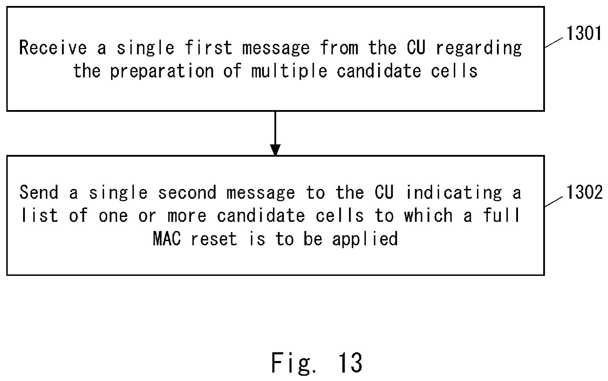

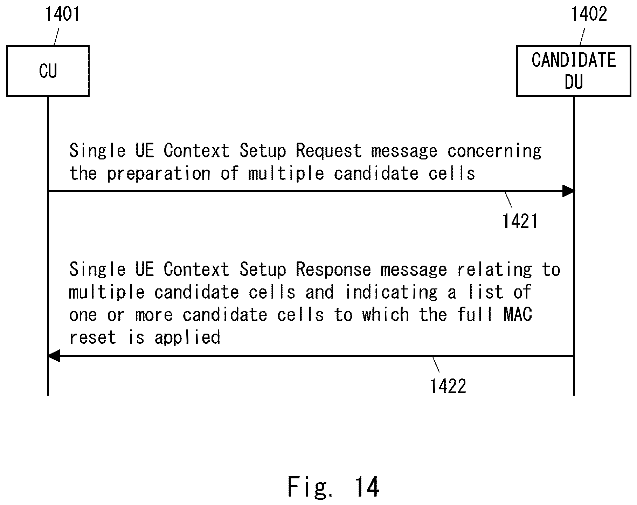

Fig. 13 shows an example of the operation of a candidate DU (e.g., gNB-DU 22) of LTM. The operation shown in Fig. 13 is one specific example of the operation described with reference to Fig. 4. Fig. 14 shows an example of signaling between a CU and a candidate DU related to Fig. 13. In steps 1301 and 1421, a candidate DU 1402 (e.g., gNB-DU 22) receives a single first message from a CU 1401 (e.g., gNB-CU 14) regarding the preparation of multiple candidate cells. The first message may be a UE CONTEXT SETUP REQUEST message. In steps 1302 and 1422, in response to receiving the single first message, the candidate DU 1402 sends a second message to the CU 1401. The second message may be a UE CONTEXT SETUP RESPONSE message.

The second message transmitted in steps 1302 and 1422 indicates the configuration of each of the multiple candidate cells and indicates a list of one or more candidate cells to which a full MAC reset is applied. The CU 1401 recognizes that the UE 40 needs to perform a full MAC reset for LTM between any of the candidate cells included in the list and other candidate cells of the candidate DU 1402. Conversely, the CU 1401 recognizes that the UE 40 needs to perform a partial MAC reset for LTM between candidate cells of the candidate DU 1402 not included in the list. In other words, if there are multiple candidate cells not included in the list, these candidate cells form a set of cells to which a partial MAC reset is applied for LTM cell switching between them.

### Second Example Embodiment

Example configurations of a radio communication system according to the present example embodiment are the same as those described with reference to Fig. 1 and Fig. 2. This example embodiment relates to signaling between the gNB 1 (or the gNB-CU 10) and the UE 40 in LTM preparation.

As described in the first example embodiment, in some implementations, an identifier (e.g., LTM candidate identifier) associated with the initial source cell may be used to allow the UE 40 to determine whether a full MAC reset or a partial MAC reset is applied to an LTM cell switch from the initial source cell to a candidate cell. Specifically, the LTM configuration may indicate a list of one or more sets. Each set of cells indicates a plurality of cells to which a partial MAC reset is applied upon an LTM cell switch between them. Each set may use LTM candidate identifiers to identify cells. A set to which the initial source cell and one or more candidate cells belong indicates the LTM candidate identifier associated with the initial source cell. For this purpose, the gNB 1 additionally includes the LTM candidate identifier associated with the initial source cell in the RRC message carrying the LTM configuration of one or more LTM candidate cells. The UE 40 uses the LTM candidate identifier associated with the initial source cell to distinguish one or more candidate cells belonging to the same set as the initial source cell. In other words, the UE 40 uses the LTM candidate identifier associated with the initial source cell to distinguish one or more candidate cells to which a partial MAC reset is applied for the first LTM cell switch from the initial source cell. Using information about the cell set, this allows the UE 40 to determine whether or not a partial MAC reset is necessary when switching from the initial source cell to another candidate cell during an LTM cell switch, even though the initial source cell is not configured as a candidate cell.

Additionally or alternatively, in some implementations, the initial source cell at the time the LTM configurations for one or more candidate cells are initially configured in the UE 40 may become one of the candidate cells for subsequent LTMs. In this case, the UE 40 retains the configuration of the initial source cell without releasing it after the first LTM and reuses the retained initial source cell configuration (e.g., Cell Group Config, Radio Bearer Config) for subsequent LTMs. For this purpose, an LTM-related identifier (e.g., LTM candidate ID) needs to be assigned to the initial source cell or its configuration to distinguish the cell configuration of the initial source cell from other candidate cell configurations. The gNB 1 further includes the LTM candidate identifier associated with the initial source cell in the RRC message carrying the LTM configuration for one or more LTM candidate cells. The RRC message may not include a cell configuration for the initial source cell. The UE 40 uses the LTM candidate identifier associated with the initial source cell to distinguish the cell configuration of the initial source cell from those of the other candidate cells, in the first LTM from the initial source cell to any of the candidate cells, or in subsequent LTMs performed after the first LTM. In other words, the UE 40 uses the LTM candidate identifier associated with the initial source cell to determine whether a partial MAC reset is applied during the first LTM cell switch from the initial source cell to any of the candidate cells, or during subsequent LTM cell switches from other candidate cells to the initial source cell or from the initial source cell to other candidate cells.

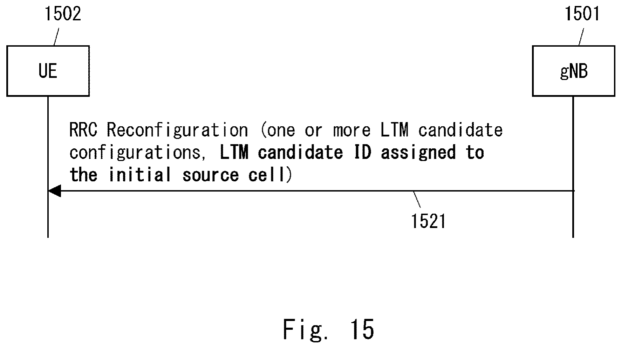

Fig. 15 shows an example of signaling between a gNB and a UE. In step 1521, a gNB 1501 sends an RRC reconfiguration message to a UE 1502. The RRC reconfiguration message is related to LTM preparation and carries an LTM configuration for one or more LTM candidate cells. The RRC reconfiguration message indicates LTM candidate identifiers (e.g., LTM candidate IDs) associated with one or more candidate cells, as well as an LTM candidate identifier associated with the initial source cell of the LTM. The RRC reconfiguration message may not include a cell configuration of the initial source cell. The UE 1502 may transmit an RRC Reconfiguration Complete message to the gNB 1501 in response to or after receiving the RRC Reconfiguration message.

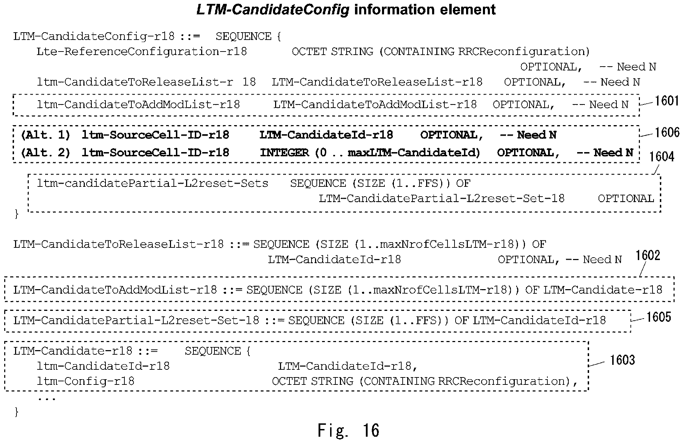

Fig. 16 shows an example of the format of an information element (IE) related to the LTM configuration contained in the RRC Reconfiguration message in step 1521. The name of the IE may be "LTM-CandidateConfig" IE. The LTM-CandidateConfig IE may include an ltm-CandidateToAddModList IE (or field) 1601. As indicated by reference numerals 1602 and 1603, the ltm-CandidateToAddModList IE/field 1601 is a list of one or more LTM-Candidate IEs 1603. One LTM-Candidate IE 1603 is associated with one candidate cell and contains an Itm-CandidateId IE (or field) indicating an LTM candidate ID, and further contains an ltm-Config IE (or field) indicating a configuration (e.g., RRCReconfiguration) of the candidate cell (e.g., cell group).

In addition, the LTM-CandidateConfig IE can include an ltm-candidatePartial-L2reset-Sets IE (or field) 1604. The ltm-candidatePartial-L2reset-Sets IE/field 1604 indicates one or more sets of candidate cells for which a full L2 reset (including a full MAC reset) is not performed during an LTM cell switch. The ltm-candidatePartial-L2reset-Sets IE/field 1604 is a list of ltm-candidatePartial-L2reset-Set IE/fields. One ltm-candidatePartial-L2reset-Set IE/field indicates one set of candidate cells for which a full L2 reset is not performed during an LTM cell switch. As indicated by reference numeral 1605, one ltm-candidatePartial-L2reset-Set IE/field is a list of one or more LTM-Candidate IEs.

The LTM-CandidateConfig IE in Fig. 16 also contains an ltm-SourceCell-ID IE (or field) 1606. The ltm-SourceCell-ID IE/field 1606 indicates the value of the LTM candidate ID assigned to the initial source cell. The definition of ltm-SourceCell-ID IE/field 1606 may be either Alternative 1 (Alt. 1) or Alternative 2 (Alt. 2) as described in Fig. 16. As shown in Alternative 1 (Alt. 1) in Fig. 16, the ltm-SourceCell-ID IE 1606 may be defined to refer to an Itm-CandidateId IE (or field). The Itm-CandidateId IE/field may be of integer type and may have an integer value between 0 and maxLTM-CandidateId, for example. As shown in Alternative 2 (Alt. 2) in Fig. 16, the ltm-SourceCell-ID IE 1606 may be defined as an integer type information element without referencing the Itm-CandidateId-r18 IE. As with other candidate cells, the value of the LTM candidate ID assigned to the initial source cell may be contained in the ltm-candidatePartial-L2reset-Sets IE/field 1604 and the ltm-candidatePartial-L2reset-Set IE/field 1605.

Alternatively, each identifier contained in the ltm-candidatePartial-L2reset-Sets IE/field 1604 may be selective between the identifier assigned to the initial source cell (e.g., LTM-SourceCell-ID, LTM-CandidateId) and the LTM Candidate ID assigned to the candidate cell. In other words, the ltm-candidatePartial-L2reset-Sets IE/field 1604 may be defined as a CHOICE structure that selects either the identifier assigned to the initial source cell or the LTM Candidate ID assigned to the candidate cell.

### Third Example Embodiment

Example configurations of a radio communication system according to the present example embodiment are the same as those described with reference to Fig. 1 and Fig. 2. This example embodiment relates to signaling between the gNB 1 (or the gNB-CU 10) and the UE 40 in LTM preparation.

In this example embodiment, the gNB 1 and the UE 40 use a default value (e.g., zero) as an LTM-related identifier of the initial source cell. In other words, the LTM-related identifier of the initial source cell is considered to be a predefined value (e.g., zero). The value of the LTM-related identifier of the initial source cell may be predefined by the 3GPP specifications. The UE 40 considers the value of the LTM-related identifier of the initial source cell to be the specified value (e.g., zero). The UE 40 may consider a cell whose LTM-related identifier is configured with a default value (e.g., zero) to be the initial source cell. As in the second embodiment, the UE 40 may receive LTM-related identifiers of one or more candidate cells different from the initial source cell via an RRC Reconfiguration message or another RRC message. More specifically, the UE 40 may receive an RRC Reconfiguration message or another RRC message from the gNB 1 containing one or more candidate cell configurations, each of which indicates an LTM-related identifier associated with its corresponding candidate cell. The UE 40 may transmit an RRC Reconfiguration Complete message to the gNB 1 (or the gNB-CU 10) in response to or after receiving the RRC Reconfiguration message.

As described in the first example embodiment, in some implementations, the LTM candidate identifier of the initial source cell may be used to allow the UE 40 to determine whether a full MAC reset or a partial MAC reset is applied to an LTM cell switch from the initial source cell to a candidate cell. Specifically, the LTM configuration may indicate a list of one or more sets. Each set of cells indicates a plurality of cells to which a partial MAC reset is applied upon an LTM cell switch between them. Each set may use LTM candidate identifiers to identify cells. The gNB 1 includes, in the set to which the initial source cell and one or more candidate cells belong, the default value (or specified value) of the LTM candidate identifier associated with the initial source cell. The UE 40 uses the default value (or specified value) of the LTM candidate identifier associated with the initial source cell to distinguish one or more candidate cells belonging to the same set as the initial source cell. In other words, the UE 40 uses the default value (or specified value) of the LTM candidate identifier associated with the initial source cell to distinguish one or more candidate cells to which a partial MAC reset is applied during the first LTM cell switch from the initial source cell. In other words, the UE 40 considers the cell with the default (or default) value of the LTM candidate identifier to be the initial source cell and recognizes one or more candidate cells to which a partial MAC reset is applied during the first LTM cell switch from the initial source cell.

Additionally or alternatively, in some implementations, the UE 40 retains the configuration of the initial source cell after the first LTM without releasing it, and reuses the retained initial source cell configuration for subsequent LTMs. As described in the second example embodiment, for this purpose, an LTM-related identifier (e.g., LTM candidate ID) needs to be assigned to the initial source cell or its configuration to distinguish the cell configuration of the initial source cell from other candidate cell configurations. The UE 40 uses the default value (or specified value) of the LTM candidate identifier associated with the initial source cell to distinguish the cell configuration of the initial source cell from those of other candidate cells, in subsequent LTMs performed after the first LTM from the initial source cell to any of the candidate cells.

### Fourth Example Embodiment

Example configurations of a radio communication system according to the present example embodiment are the same as those described with reference to Fig. 1 and Fig. 2. This example embodiment relates to signaling between the gNB 1 (or the gNB-CU 10) and the UE 40 in LTM preparation. This example embodiment relates to the handling of the configuration of the initial source cell for subsequent LTMs.

The initial source cell at the time the LTM configurations for one or more candidate cells are initially configured in the UE 40 may become one of the candidate cells for subsequent LTMs. In this example embodiment, if the initial source cell is one of the candidate cells for subsequent LTMs, the gNB 1 explicitly configures the LTM candidate configuration for the initial source cell. Specifically, if the gNB 1 wishes to use the initial source cell for subsequent LTMs, the gNB 1 explicitly configures the initial source cell as one of the multiple LTM candidate cell configurations. The LTM candidate cell configuration for the initial source cell includes an LTM-related identifier (e.g., LTM candidate ID) associated with the initial source cell or its configuration. If a message received from the gNB 1 indicates that the initial source cell is configured as one of multiple LTM candidate cell configurations, the UE 40 may consider the initial source cell to be one of the candidate cells for subsequent LTMs. The message may contain the configurations of multiple LTM candidate cells containing the initial source cell. The message may be an RRC Reconfiguration message or another RRC message. The message may include an LTM configuration containing the ltm-CandidateToAddModList IE 1601 shown in Fig. 16. In this case, one of the entries in the ltm-CandidateToAddModList IE 1601 contains the LTM-related identifier (e.g., LTM candidate ID) and configuration (e.g., LTM-Config) of the source cell. The UE 40 may send a response message to the gNB 1 in response to receiving the message.

### Fifth Example Embodiment

Example configurations of a radio communication system according to the present example embodiment are the same as those described with reference to Fig. 1 and Fig. 2. This example embodiment relates to signaling between the gNB 1 (or the gNB-CU 10) and the UE 40 in LTM preparation.

As described in the first example embodiment, in some implementations, the set ID of the cell set to which the initial source cell belongs may be used to allow the UE 40 to determine whether a full MAC reset or a partial MAC reset is applied to an LTM cell switch from the initial source cell to a candidate cell. In this example embodiment, the gNB 1 transmits the set ID of the cell set to which the initial source cell belongs to the UE 40 either together with or included in the LTM configuration. For the first LTM cell switch from the initial source cell to a candidate cell, the UE 40 determines to apply a partial MAC reset if the candidate cell is associated with the same set ID as the initial source cell. That is, the UE 40 uses the set ID of the cell set to which the initial source cell belongs to distinguish one or more candidate cells belonging to the same set as the initial source cell. In other words, the UE 40 uses the set ID of the cell set to which the initial source cell belongs to distinguish one or more candidate cells to which a partial MAC reset is applied in the first LTM cell switch from the initial source cell.

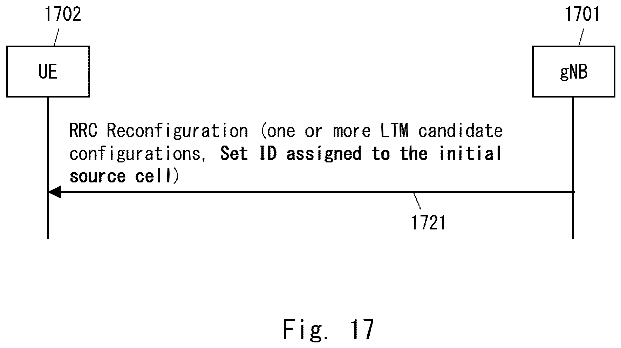

Fig. 17 shows an example of signaling between a gNB and a UE. In step 1721, a gNB 1701 sends an RRC Reconfiguration message to a UE 1702. The RRC Reconfiguration message is related to LTM preparation and indicates the set ID of the cell set to which each of one or more LTM candidate cells belongs. The RRC Reconfiguration message further indicates the set ID of the cell set to which the initial source cell belongs. The RRC Reconfiguration message may not include a cell configuration for the initial source cell. The initial source cell is the source cell (or serving cell) during the LTM preparation phase, and the "initial source cell" in step 1721 may simply be referred to as the "source cell". The UE 1702 may send an RRC Reconfiguration Complete message to the gNB 1701 in response to or after receiving the RRC Reconfiguration message.

### Sixth Example Embodiment

Example configurations of a radio communication system according to the present example embodiment are the same as those described with reference to Fig. 1 and Fig. 2. This example embodiment relates to an operation in cases where a UE 40 configured with an LTM configuration detects a radio link failure or an LTM failure.

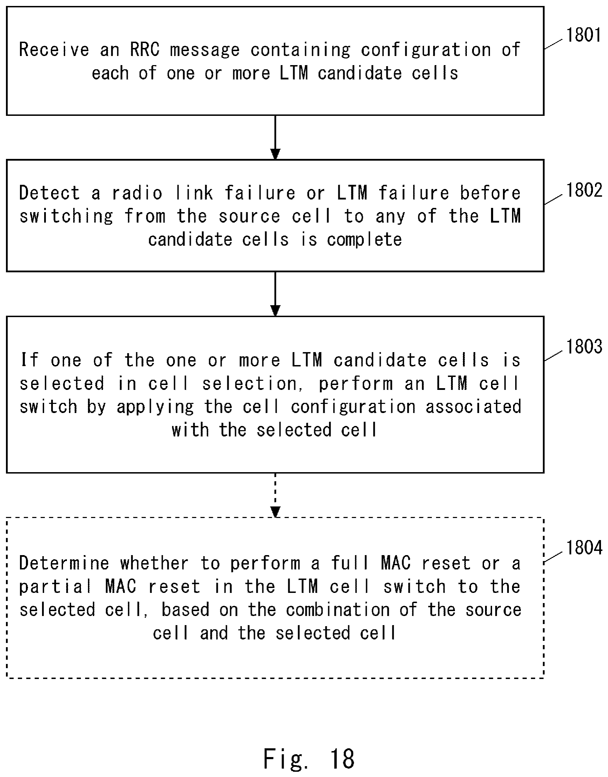

Fig. 18 shows an example of the operation of the UE 40. In step 1801, the UE 40 receives an RRC message containing a configuration of each of one or more LTM candidate cells from the gNB 1. The RRC message may be an RRC Reconfiguration message (e.g., step 303 in Fig. 3). In step 1802, the UE 40 detects a radio link failure (RLF) or an LTM failure before an LTM cell switch from the source cell to one or more candidate cells is completed after receiving the RRC message. For example, a radio link failure is detected or declared by the UE 40 if the UE 40 detects a physical layer failure (e.g., out-of-sync) in the source cell before starting the LTM execution to any of the LTM candidate cells. In another example, a radio link failure is detected or declared by the UE 40 if the UE 40 detects a physical layer failure in a serving cell after completing the LTM execution to any of the LTM candidate cells. On the other hand, for example, an LTM failure is detected or declared by the UE 40 if the UE 40 attempts to execute LTM by applying the configuration of the specified LTM candidate cell (RRC Reconfiguration) in response to receiving a cell switch command (e.g., step 308 in Fig. 3), but the LTM execution is not completed successfully.

In step 1803, the UE 40 initiates an RRC connection reestablishment procedure and performs cell selection in response to detecting a radio link failure or an LTM failure. If one of the one or more LTM candidate cells specified in the LTM configuration (step 1801) is selected in the cell selection, the UE 40 performs an LTM cell switch by applying the cell configuration associated with the selected cell. Execution of the LTM cell switch includes transmission of an LTM completion notification (e.g., step 311 in Fig. 3) to the gNB 1 via the selected cell. The UE 40 may only perform these actions (or processes) performed if permitted by an RRC message received from the gNB 1 (or if the UE 40 has received information from the gNB 1 indicating that they may be executed). The UE 40 may report the failure occurrence to the network using a cause value indicating the occurrence or detection of a radio link failure or LTM failure.

As shown in step 1804, the UE 40 may determine whether to perform a full MAC reset or a partial MAC reset in the LTM cell switch to the selected cell, with respect to the combination of the source cell and the selected cell. More specifically, if the UE 40 selects an LTM candidate cell in the RRC connection reestablishment procedure initiated in response to the detection of an LTM failure, it determines whether to perform a full MAC reset or a partial MAC reset with respect to the combination of the source cell and the selected cell, rather than with respect to the combination of the candidate cells that detected the LTM failure and the selected cell. Similarly, if a radio link failure is detected in the source cell, the UE 40 may determine whether to perform a full MAC reset or a partial MAC reset based on the combination of the source cell and the LTM candidate cell selected in response to the detection of the radio link failure.

The operation of the UE 40 described in this example embodiment helps clarify the operation in cases where the UE 40 configured with the LTM configuration detects a radio link failure or an LTM failure.

### Seventh Example Embodiment

Example configurations of a radio communication system according to the present example embodiment are the same as those described with reference to Fig. 1 and Fig. 2. This example embodiment relates to signaling between the gNB-CU-CP 11 and the gNB-CU-UP 12 for supporting LTM.

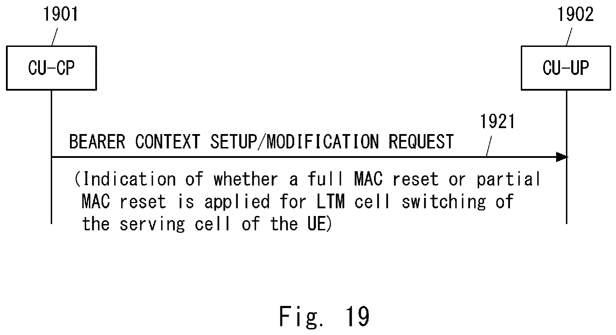

Fig. 19 shows an example of the operation of a CU-CP (e.g., gNB-CU-CP 11) and a CU-UP (e.g., gNB-CU-UP 12). In step 1921, a CU-CP 1901 sends a control message to a CU-UP 1902, indicating whether a full MAC reset or a partial MAC reset is to be applied to the LTM serving cell switching of the UE 40. The control message may be an E1AP message and, more specifically, a BEARER CONTEXT MODIFICATION REQUEST message. The CU-CP 1901 may send the control message to the CU-UP 1902 in response to the decision to execute LTM (e.g., step 307 in Fig. 3). Alternatively, the CU-CP 1901 may send the control message to the CU-UP 1902 in response to the completion of the LTM execution (e.g., step 311 in Fig. 3). The CU-CP 1901 may add a new CU-UP for the UE 40 in response to the preparation, decision, or completion of the LTM. In this case, the E1AP message in step 1921 may be a BEARER CONTEXT SETUP REQUEST message. The CU-UP 1902 may send a response message to the CU-CP 1901 in response to receiving the control message of step 1921. If the control message is a BEARER CONTEXT MODIFICATION REQUEST or BEARER CONTEXT SETUP REQUEST message, the response message may be a BEARER CONTEXT MODIFICATION RESPONSE or BEARER CONTEXT SETUP RESPONSE message.

According to the operation shown in Fig. 19, the CU-CP 1901 can notify the CU-UP 1902 whether or not a partial MAC reset is to be performed by the UE 40 in the LTM cell switch.

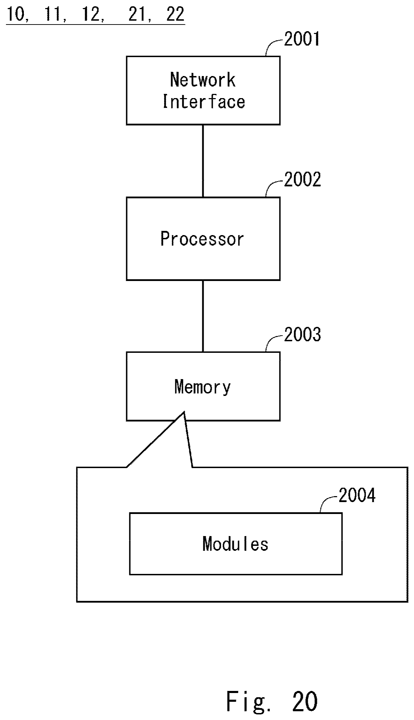

The following describes example configurations of the gNB-CU 10, gNB-CU-CP 11, gNB-CU-UP 12, gNB-DUs 21 and 22, and UE 40. Fig. 20 shows a block diagram of an example configuration of the gNB-CU 10. The configuration of the gNB-CU-CP 11, gNB-CU-UP 12, and gNB-DUs 21 and 22 may be similar to that shown in Fig. 20. Additionally, the configuration of the CUs (e.g., CUs 601, 801, etc.), DUs (e.g., gNB-DUs 602, 802, etc.), CU-CP (e.g., CU-CP 1801), and CU-UP (e.g., CU-UP 1802) described in the above example embodiments may also be similar to the configuration shown in Fig. 20.

Referring to Fig. 20, the gNB-CU 10 includes a network interface 2001, a processor 2002, and a memory 2003. The network interface 2001 is used to communicate with network nodes (e.g., gNB-DUs, and control plane (CP) nodes and/or user plane (UP) nodes in the core network). The network interface 2001 may include a plurality of interfaces. The network interface 2001 may include, for example, a fiber optic interface for communication between the CU and DUs and a network interface compliant with the IEEE 802.3 series.

The processor 2002 may include a plurality of processors. If the gNB-CU 10 is a gNB-CU-CP, the processor 2002 performs control plane processing, such as processing related to NGAP, RRC, E1AP, and F1AP signaling. If the gNB-CU 10 includes a gNB-CU-UP, the processor 2002 performs, for example, NG-U interface termination, F1-U interface termination, and data processing for the SDAP and PDCP layers.

In the case of the gNB-DUs 21 and 22, the processor 2002 performs digital baseband signal processing (data plane processing) and control plane processing for wireless communications. For example, the processor 2002 may include a modem processor (e.g., a Digital Signal Processor (DSP)) that performs digital baseband signal processing and a protocol stack processor (e.g., a Central Processing Unit (CPU) or a Micro Processing Unit (MPU)) that performs control plane processing. The digital baseband signal processing may include signal processing for the RLC, MAC, and PHY layers. The control plane processing may include processing of MAC CEs and DCIs. The processor 2002 may include a digital beamformer module for beamforming. The digital beamformer module may include a MIMO encoder and precoder.

The memory 2003 is composed of a combination of volatile and non-volatile memory. The volatile memory is, for example, Static Random Access Memory (SRAM), Dynamic RAM (DRAM), or a combination thereof. The non-volatile memory is Mask Read Only Memory (MROM), Electrically Erasable Programmable ROM (EEPROM), flash memory, hard disk drive, or any combination thereof. The memory 2003 may include storage that is remote from the processor 2002. In this case, the processor 2002 may access the memory 2003 through the network interface 2001 or an I/O interface not shown.

The memory 2003 may store one or more software modules (or computer programs) 2004 containing a set of instructions and data for processing by the gNB-CU 10 described in the plurality of embodiments described above. In some implementations, the processor 2002 may be configured to read and execute the one or more software modules 2004 from the memory 2003, thereby performing the processing of the gNB-CU 10 described in the example embodiments described above.

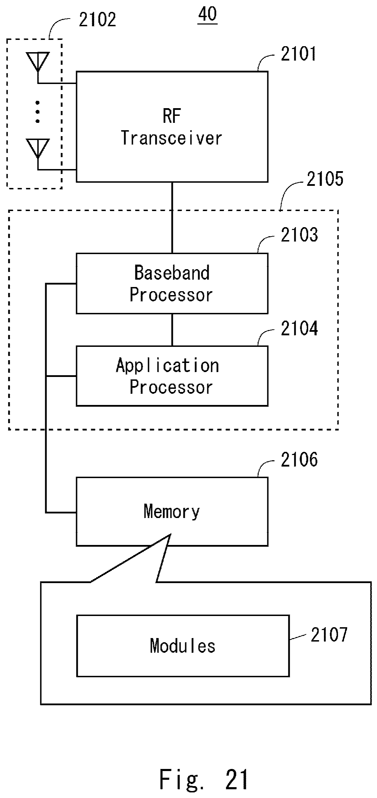

Fig. 21 is a block diagram showing an example configuration of the UE 40. The configuration of the UEs (e.g., UE 1502) described in the above example embodiments may be similar to the configuration shown in Fig. 21.

The RF transceiver 2101 performs analog RF signal processing to communicate with the TRPs. The RF transceiver 2101 may include a plurality of transceivers. The analog RF signal processing performed by the RF transceiver 2101 includes frequency up-conversion, frequency down-conversion, and amplification. The RF transceiver 2101 is coupled with an antenna array 2102 and a baseband processor 2103. The RF transceiver 2101 receives modulated symbol data (or OFDM symbol data) from the baseband processor 2103, generates a transmission RF signal, and supplies the transmission RF signal to the antenna array 2102. The RF transceiver 2101 also generates a baseband received signal based on a received RF signal received by the antenna array 2102, and supplies the baseband received signal to the baseband processor 2103. The RF transceiver 2101 may include an analog beamformer circuit for beamforming. The analog beamformer circuit includes, for example, multiple phase shifters and multiple power amplifiers.

The baseband processor 2103 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 2103 may include signal processing for the SDAP, PDCP, RLC, MAC, and PHY layers. The control plane processing by the baseband processor 2103 may include processing of Non-Access Stratum (NAS) protocols, RRC protocols, MAC CEs, and DCIs.

The baseband processor 2103 may perform MIMO encoding and precoding for beamforming.

The baseband processor 2103 may include a modem processor (e.g., DSP) that performs digital baseband signal processing and a protocol stack processor (e.g., CPU or MPU) that performs control plane processing. In this case, the protocol stack processor that performs control plane processing may be integrated with an application processor 2104 described later.

The application processor 2104 is also referred to as a CPU, MPU, microprocessor, or processor core. The application processor 2104 may include a plurality of processors (a plurality of processor cores). The application processor 2104 executes system software programs (operating system (OS)) and various application programs (e.g., voice call application, web browser, mailer, camera control application, music player application) read from a memory 2106 or other memory not shown, thereby realizing various functions of the UE 40.

In some implementations, as shown by the dashed line (2105) in Fig. 22, the baseband processor 2103 and the application processor 2104 may be integrated on a single chip. In other words, the baseband processor 2103 and the application processor 2104 may be implemented as a single System on Chip (SoC) device 2105. The SoC device may also be referred to as a system large-scale integration (LSI) or chipset.

The memory 2106 is a volatile memory, a non-volatile memory, or a combination thereof. The memory 2106 may include a plurality of physically independent memory devices. The volatile memory is, for example, SRAM, DRAM, or a combination thereof. The non-volatile memory is, for example, MROM, EEPROM, flash memory, or a hard disk drive, or any combination thereof. For example, the memory 2106 may include an external memory device that is accessible by the baseband processor 2103, the application processor 2104, and the SoC 2105. The memory 2106 may include an internal memory device that is integrated into the baseband processor 2103, the application processor 2104, or the SoC 2105. In addition, the memory 2106 may include memory within a Universal Integrated Circuit Card (UICC).

The memory 2106 may store one or more software modules (or computer programs) 2107 that include a set of instructions and data for performing the processing by the radio terminal 3 described in the above example embodiments. In some implementations, the baseband processor 2103 or the application processor 2104 may be configured to read and execute the software modules 2107 from the memory 2106, thereby performing the processing of the UE 40 as described in the example embodiments with reference to the drawings.

The control plane processing and operations performed by the UE 40 described in the above example embodiment can be implemented by elements other than the RF transceiver 2101 and the antenna array 2102, namely at least one of the baseband processor 2103 and the application processor 2104, and the memory 2106 that stores the software modules 2107.

As described using Figs. 20 and 21, each of the processors in the gNB-CUs, gNB-CU-CPs, gNB-CU-UPs, gNB-DUs, and UEs according to the example embodiments described above can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The above example embodiments are merely examples of the application of the technical concepts obtained by the inventors. These technical concepts are not limited to the above example embodiments and may be modified in various ways.

For example, the whole or part of the example embodiments disclosed above can be described as, but not limited to, the following supplementary notes. Of course, some or all of the elements (e.g., configurations and functionality) described in the Supplementary Notes directed to apparatuses (e.g., distributed units, central units, RAN nodes, radio terminals) may also be described as or in Supplementary Notes directed to methods and programs. For example, some or all of the elements listed in Supplementary Notes 2-12 that depend on Supplementary Note 1 may also be listed as Supplementary Notes that depend on Supplementary Note 13 or 14 with the same dependency as Supplementary Notes 2-12. Similarly, some or all of the elements listed in Supplementary Notes 16-29 that depend on Supplementary Note 15 may also be listed as Supplementary Notes that depend on Supplementary Note 30 or 31 with the same dependency as Supplementary Notes 16-29. Some or all of the elements described in a Supplementary Note may be applicable to various hardware, software, storage for storing software, systems, and methods.

### (Supplementary Note 1)

A distributed unit (DU) of a radio access network (RAN) node, comprising:
means for receiving one or more first messages from a central unit (CU) of the RAN node regarding preparation of one or more candidate cells for Layer-1/Layer-2 triggered mobility (LTM) of a radio terminal; and
means for, in response to receiving the one or more first messages, sending one or more second messages to the CU indicating whether a full Medium Access Control (MAC) reset or a partial MAC reset is to be applied to an LTM cell switch between an initial source cell and any cell included in the one or more candidate cells, or between any two cells included in the one or more candidate cells.

### (Supplementary Note 2)

The DU according to Supplementary Note 1, wherein the one or more second messages indicate one or more sets of candidate cells to which the partial MAC reset is applied.

### (Supplementary Note 3)

The DU according to Supplementary Note 1, wherein
the means for receiving is adapted to receive a plurality of first messages, each relating to the preparation of a candidate cell,
the means for sending is adapted to send a plurality of second messages to the CU, each relating to a candidate cell, in response to receiving the plurality of first messages,
each of the plurality of second messages indicates a configuration of its corresponding candidate cell and an index of a cell set to which the corresponding candidate cell belongs, and
the cell set indicates a plurality of cells for which the radio terminal does not need to perform the full MAC reset upon an LTM cell switch between them.

### (Supplementary Note 4)

The DU according to Supplementary Note 3, wherein the index of the cell set is unique among multiple candidate DUs, including the DU.

### (Supplementary Note 5)

The DU according to Supplementary Note 4, wherein
each of the plurality of first messages indicates a set, list, or range of one or more candidate values of the index of the cell set, and
the means for sending is adapted to select, from the set, list, or range of the candidate values, the index of the cell set to be included in each of the plurality of second messages.

### (Supplementary Note 6)

The DU according to Supplementary Note 4 or 5, wherein the index of the cell set to which the initial source cell belongs is a predefined value.

### (Supplementary Note 7)

The DU according to Supplementary Note 3, wherein the index of the cell set is unique only within the DU.

### (Supplementary Note 8)

The DU according to Supplementary Note 1, wherein
the means for receiving is adapted to receive a single first message relating to the preparation of a plurality of candidate cells, and
the means for sending is adapted to send a single second message to the CU in response to receiving the single first message, indicating a configuration of each of the plurality of candidate cells and indicating one or more sets of candidate cells to which the partial MAC reset is applied.

### (Supplementary Note 9)

The DU according to Supplementary Note 1, wherein the one or more second messages indicate one or more candidate cells to which the full MAC reset is applied.

### (Supplementary Note 10)

The DU according to Supplementary Note 1, wherein
the means for receiving is adapted to receive a plurality of first messages, each relating to the preparation of a candidate cell,
the means for sending is adapted to send a plurality of second messages to the CU, each relating to a candidate cell, in response to receiving the plurality of first messages, and
each of the plurality of second messages indicates a configuration of its corresponding candidate cell and whether the full MAC reset is applied to the corresponding candidate cell.

### (Supplementary Note 11)

The DU according to Supplementary Note 1, wherein
the means for receiving is adapted to receive a single first message relating to the preparation of a plurality of candidate cells, and
the means for sending is adapted to send a single second message to the CU in response to receiving the single first message, indicating a configuration of each of the plurality of candidate cells and indicating a list of one or more candidate cells to which the full MAC reset is applied.

### (Supplementary Note 12)

The DU according to any one of Supplementary Notes 1 to 11, wherein
in the full MAC reset, the radio terminal performs a plurality of operations including initializing one or more parameters, canceling one or more triggered processes, and flushing one or more buffers, and
in the partial MAC reset, the radio terminal performs only a part of the plurality of operations.

### (Supplementary Note 13)

A method performed by a distributed unit (DU) of a radio access network (RAN) node, comprising:
receiving one or more first messages from a central unit (CU) of the RAN node regarding preparation of one or more candidate cells for Layer-1/Layer-2 triggered mobility (LTM) of a radio terminal; and
in response to receiving the one or more first messages, sending one or more second messages to the CU indicating whether a full Medium Access Control (MAC) reset or a partial MAC reset is to be applied to an LTM cell switch between an initial source cell and any cell included in the one or more candidate cells, or between any two cells included in the one or more candidate cells.

### (Supplementary Note 14)

A program for causing a computer to perform a method for a distributed unit (DU) of a radio access network (RAN) node, the comprising:
receiving one or more first messages from a central unit (CU) of the RAN node regarding preparation of one or more candidate cells for Layer-1/Layer-2 triggered mobility (LTM) of a radio terminal; and
in response to receiving the one or more first messages, sending one or more second messages to the CU indicating whether a full Medium Access Control (MAC) reset or a partial MAC reset is to be applied to an LTM cell switch between an initial source cell and any cell included in the one or more candidate cells, or between any two cells included in the one or more candidate cells.

### (Supplementary Note 15)

A central unit (CU) of a radio access network (RAN) node, comprising:
means for sending one or more first messages to a distributed unit (DU) of the RAN node regarding a preparation of one or more candidate cells for Layer-1/Layer-2 triggered mobility (LTM) of a radio terminal; and
means for, after sending the one or more first messages, receiving one or more second messages from the DU indicating whether a full Medium Access Control (MAC) reset or a partial MAC reset is to be applied to an LTM cell switch between an initial source cell and any cell included in the one or more candidate cells, or between any two cells included in the one or more candidate cells.

### (Supplementary Note 16)

The CU according to Supplementary Note 15, wherein the one or more second messages indicate one or more sets of candidate cells to which the partial MAC reset is applied.

### (Supplementary Note 17)

The CU according to Supplementary Note 15, wherein
the means for sending is adapted to send a plurality of first messages to the DU, each relating to the preparation of a candidate cell,
the means for receiving is adapted to receive a plurality of second messages from the DU, each relating to a candidate cell,
each of the plurality of second messages indicates a configuration of its corresponding candidate cell and an index of a cell set to which the corresponding candidate cell belongs, and
the cell set indicates a plurality of cells for which the radio terminal does not need to perform the full MAC reset upon an LTM cell switch between them.

### (Supplementary Note 18)

The CU according to Supplementary Note 17, wherein the index of the cell set is unique among multiple candidate DUs, including the DU.

### (Supplementary Note 19)

The CU according to Supplementary Note 18, wherein
each of the plurality of first messages indicates a set, list, or range of one or more candidate values of the index of the cell set, and
each of the plurality of second messages indicates the index of the cell set selected by the DU from a first set, list, or range of candidate values.

### (Supplementary Note 20)

The CU according to Supplementary Note 19, further comprising:
means for receiving a second set, list, or range of candidate values from a source DU that provides the initial source cell; and
means for determining the first set, list, or range of candidate values from the second set, list, or range of candidate values received from the source DU.

### (Supplementary Note 21)

The CU according to any one of Supplementary Notes 18 to 20, wherein the index of the cell set to which the initial source cell belongs is a predefined value.

### (Supplementary Note 22)

The CU according to Supplementary Note 17, wherein the index of the cell set is unique only within the DU.

### (Supplementary Note 23)

The CU according to Supplementary Note 15, wherein
the means for sending is adapted to send a single first message to the DU relating to the preparation of a plurality of candidate cells, and
the means for receiving is adapted to receive a single second message from the DU, indicating a configuration of each of the plurality of candidate cells and indicating one or more sets of candidate cells to which the partial MAC reset is applied.

### (Supplementary Note 24)

The CU according to Supplementary Note 15, wherein the one or more second messages indicate one or more candidate cells to which the full MAC reset is applied.

### (Supplementary Note 25)

The CU according to Supplementary Note 15, wherein
the means for sending is adapted to send a plurality of first messages to the DU, each relating to the preparation of a candidate cell,
the means for receiving is adapted to receive a plurality of second messages from the DU, each relating to a candidate cell, and
each of the plurality of second messages indicates a configuration of its corresponding candidate cell and whether the full MAC reset is applied to the corresponding candidate cell.

### (Supplementary Note 26)

The CU according to Supplementary Note 25, further comprising means for, if one of the plurality of second messages indicates that the full MAC reset is applied to its corresponding candidate cell, recognizing that the radio terminal needs to perform the full MAC reset in a case of LTM between the corresponding candidate cell and another candidate cell of the DU.

### (Supplementary Note 27)

The CU according to Supplementary Note 25, further comprising means for, if one of the plurality of second messages indicates that the partial MAC reset is applied to its corresponding candidate cell, recognizing that the radio terminal needs to perform the partial MAC reset in a case of LTM between the corresponding candidate cell and another candidate cell of the DU, other than cells to which the full MAC reset is applied.

### (Supplementary Note 28)

The CU according to Supplementary Note 15, wherein
the means for sending is adapted to send a single first message to the DU relating to the preparation of a plurality of candidate cells, and
the means for receiving is adapted to receive a single second message from the DU, indicating a configuration of each of the plurality of candidate cells and indicating a list of one or more candidate cells to which the full MAC reset is applied.

### (Supplementary Note 29)

The CU according to any one of Supplementary Notes 15 to 28, wherein
in the full MAC reset, the radio terminal performs a plurality of operations including initializing one or more parameters, canceling one or more triggered processes, and flushing one or more buffers, and
in the partial MAC reset, the radio terminal performs only a part of the plurality of operations.

### (Supplementary Note 30)

A method performed by a central unit (CU) of a radio access network (RAN) node, comprising:
sending one or more first messages to a distributed unit (DU) of the RAN node regarding a preparation of one or more candidate cells for Layer-1/Layer-2 triggered mobility (LTM) of a radio terminal; and
after sending the one or more first messages, receiving one or more second messages from the DU indicating whether a full Medium Access Control (MAC) reset or a partial MAC reset is to be applied to an LTM cell switch between an initial source cell and any cell included in the one or more candidate cells, or between any two cells included in the one or more candidate cells.

### (Supplementary Note 31)

A program for causing a computer to perform a method for a central unit (CU) of a radio access network (RAN) node, the method comprising:
sending one or more first messages to a distributed unit (DU) of the RAN node regarding a preparation of one or more candidate cells for Layer-1/Layer-2 triggered mobility (LTM) of a radio terminal; and
after sending the one or more first messages, receiving one or more second messages from the DU indicating whether a full Medium Access Control (MAC) reset or a partial MAC reset is to be applied to an LTM cell switch between an initial source cell and any cell included in the one or more candidate cells, or between any two cells included in the one or more candidate cells.

### (Supplementary Note 32)

A radio access network (RAN) node comprising:
means for transmitting a Radio Resource Control (RRC) message containing a configuration of one or more candidate cells for Layer-1/Layer-2 triggered mobility (LTM) to a radio terminal via an initial source cell of the LTM,
wherein the RRC message indicates, in addition to an LTM candidate identifier or cell set identifier associated with each of the one or more candidate cells, an LTM candidate identifier or cell set identifier associated with the initial source cell of the LTM.

### (Supplementary Note 33)

The RAN node according to Supplementary Note 32, wherein the LTM candidate identifier associated with the initial source cell is used to distinguish the initial source cell from other candidate cells in a subsequent LTM performed after a first LTM from the initial source cell to one of the candidate cells.

### (Supplementary Note 34)

The RAN node according to Supplementary Note 32, wherein the LTM candidate identifier or cell set identifier associated with the initial source cell is used by the radio terminal to determine whether a full Medium Access Control (MAC) reset or a partial MAC reset is applied to a first LTM cell switch from the initial source cell to one of the candidate cells.

### (Supplementary Note 35)

A method performed by a radio access network (RAN) node, comprising:
transmitting a Radio Resource Control (RRC) message containing a configuration of one or more candidate cells for Layer-1/Layer-2 triggered mobility (LTM) to a radio terminal via an initial source cell of the LTM,
wherein the RRC message indicates, in addition to an LTM candidate identifier or cell set identifier associated with each of the one or more candidate cells, an LTM candidate identifier or cell set identifier associated with the initial source cell of the LTM.

### (Supplementary Note 36)

A radio terminal comprising:
means for receiving a Radio Resource Control (RRC) message containing a configuration of one or more candidate cells for Layer-1/Layer-2 triggered mobility (LTM) from a radio access network (RAN) node via an initial source cell of the LTM,
wherein the RRC message indicates, in addition to an LTM candidate identifier or cell set identifier associated with each of the one or more candidate cells, an LTM candidate identifier or cell set identifier associated with the initial source cell of the LTM.

### (Supplementary Note 37)

The radio terminal according to Supplementary Note 36, further comprising means for using the LTM candidate identifier associated with the initial source cell to distinguish the initial source cell from other candidate cells in a subsequent LTM performed after a first LTM from the initial source cell to one of the candidate cells.

### (Supplementary Note 38)

The radio terminal according to Supplementary Note 37, further comprising means for retaining a configuration of the initial source cell without releasing it after the first LTM, and for reusing the configuration of the initial source cell in the subsequent LTM.

### (Supplementary Note 39)

The radio terminal according to Supplementary Note 36, further comprising means for using the LTM candidate identifier or cell set identifier associated with the initial source cell to determine whether a full Medium Access Control (MAC) reset or a partial MAC reset is applied to a first LTM cell switch from the initial source cell to one of the candidate cells.

### (Supplementary Note 40)

A method performed by a radio terminal, comprising:
receiving a Radio Resource Control (RRC) message containing a configuration of one or more candidate cells for Layer-1/Layer-2 triggered mobility (LTM) from a radio access network (RAN) node via an initial source cell of the LTM,
wherein the RRC message indicates, in addition to an LTM candidate identifier or cell set identifier associated with each of the one or more candidate cells, an LTM candidate identifier or cell set identifier associated with the initial source cell of the LTM.

### (Supplementary Note 41)

A radio terminal comprising:
means for receiving a Radio Resource Control (RRC) message containing a configuration of one or more candidate cells for Layer-1/Layer-2 triggered mobility (LTM) from a radio access network (RAN) node; and
means for, if a radio link failure or LTM failure is detected before an LTM cell switch from a source cell to any of the one or more candidate cells is completed after receiving the RRC message, and one of the one or more candidate cells is selected in a cell selection, performing an LTM cell switch by applying the configuration associated with the selected cell.

### (Supplementary Note 42)

The radio terminal according to Supplementary Note 41, further comprising means for determining whether to perform a full Medium Access Control (MAC) reset or a partial MAC reset in the LTM cell switch to the selected cell, with respect to a combination of the source cell and the selected cell.

### (Supplementary Note 43)

A method performed by a radio terminal, comprising:
receiving a Radio Resource Control (RRC) message containing a configuration of one or more candidate cells for Layer-1/Layer-2 triggered mobility (LTM) from a radio access network (RAN) node; and
if a radio link failure or LTM failure is detected before an LTM cell switch from a source cell to any of the one or more candidate cells is completed after receiving the RRC message, and one of the one or more candidate cells is selected in a cell selection, performing an LTM cell switch by applying the configuration associated with the selected cell.

### (Supplementary Note 44)

An apparatus configured to operate as a central unit control plane of a radio access network (RAN) node, comprising:
means for sending a control message to a central unit user plane of the RAN node indicating whether a full Medium Access Control (MAC) reset or a partial MAC reset is applied to switching of a serving cell of a radio terminal by Layer-1/Layer-2 triggered mobility (LTM).

### (Supplementary Note 45)

The apparatus according to Supplementary Note 44, wherein the control message is an E1 Application Protocol (E1AP) BEARER CONTEXT MODIFICATION REQUEST message.

### (Supplementary Note 46)

The apparatus according to Supplementary Note 44 or 45, wherein
in the full MAC reset, the radio terminal performs a plurality of operations including initializing one or more parameters, canceling one or more triggered processes, and flushing one or more buffers, and
in the partial MAC reset, the radio terminal performs only a part of the plurality of operations.

### (Supplementary Note 47)

A method performed by an apparatus configured to operate as a central unit control plane of a radio access network (RAN) node, the method comprising:
sending a control message to a central unit user plane of the RAN node indicating whether a full Medium Access Control (MAC) reset or a partial MAC reset is applied to switching of a serving cell of a radio terminal by Layer-1/Layer-2 triggered mobility (LTM).

### (Supplementary Note 48)

An apparatus configured to operate as a central unit user plane of a radio access network node, comprising:
means for receiving a control message from a central unit control plane of the RAN node indicating whether a full Medium Access Control (MAC) reset or a partial MAC reset is applied to switching of a serving cell of a radio terminal by Layer-1/Layer-2 triggered mobility (LTM).

### (Supplementary Note 49)

The apparatus according to Supplementary Note 48, wherein the control message is an E1 Application Protocol (E1AP) BEARER CONTEXT MODIFICATION REQUEST message.

### (Supplementary Note 50)

The apparatus according to Supplementary Note 48 or 49, wherein
in the full MAC reset, the radio terminal performs a plurality of operations including initializing one or more parameters, canceling one or more triggered processes, and flushing one or more buffers, and
in the partial MAC reset, the radio terminal performs only a part of the plurality of operations.

### (Supplementary Note 51)

A method performed by an apparatus configured to operate as a central unit user plane of a radio access network node, the method comprising:
receiving a control message from a central unit control plane of the RAN node indicating whether a full Medium Access Control (MAC) reset or a partial MAC reset is applied to switching of a serving cell of a radio terminal by Layer-1/Layer-2 triggered mobility (LTM).

This application is based upon and claims the benefit of priority from Japanese Patent Application No. 2023-061041, filed on April 4, 2023, the disclosure of which is incorporated herein in its entirety by reference.

### Reference Signs List

1 gNB
10 gNB-CU
11 gNB-CU-CP
12 gNB-CU-UP
21, 22gNB-DU
31, 32, 33, 34 TRP
40 UE
51, 52, 53, 54 Cell
120 Intra-DU LTM
140 Inter-DU LTM
2002 Processor
2003 Memory
2103 Baseband processor
2104 Application processor
2106 Memory

## Claims

1. A distributed unit (DU) of a radio access network (RAN) node, comprising:
means for receiving one or more first messages from a central unit (CU) of the RAN node regarding preparation of one or more candidate cells for Layer-1/Layer-2 triggered mobility (LTM) of a radio terminal; and
means for, in response to receiving the one or more first messages, sending one or more second messages to the CU indicating whether a full Medium Access Control (MAC) reset or a partial MAC reset is to be applied to an LTM cell switch between an initial source cell and any cell included in the one or more candidate cells, or between any two cells included in the one or more candidate cells.

2. The DU according to claim 1, wherein the one or more second messages indicate one or more sets of candidate cells to which the partial MAC reset is applied.

3. The DU according to claim 1, wherein
the means for receiving is adapted to receive a plurality of first messages, each relating to the preparation of a candidate cell,
the means for sending is adapted to send a plurality of second messages to the CU, each relating to a candidate cell, in response to receiving the plurality of first messages,
each of the plurality of second messages indicates a configuration of its corresponding candidate cell and an index of a cell set to which the corresponding candidate cell belongs, and
the cell set indicates a plurality of cells for which the radio terminal does not need to perform the full MAC reset upon an LTM cell switch between them.

4. The DU according to claim 3, wherein the index of the cell set is unique among multiple candidate DUs, including the DU.

5. The DU according to claim 4, wherein
each of the plurality of first messages indicates a set, list, or range of one or more candidate values of the index of the cell set, and
the means for sending is adapted to select, from the set, list, or range of the candidate values, the index of the cell set to be included in each of the plurality of second messages.

6. The DU according to claim 4 or 5, wherein the index of the cell set to which the initial source cell belongs is a predefined value.

7. The DU according to claim 3, wherein the index of the cell set is unique only within the DU.

8. The DU according to claim 1, wherein
the means for receiving is adapted to receive a single first message relating to the preparation of a plurality of candidate cells, and
the means for sending is adapted to send a single second message to the CU in response to receiving the single first message, indicating a configuration of each of the plurality of candidate cells and indicating one or more sets of candidate cells to which the partial MAC reset is applied.

9. The DU according to claim 1, wherein the one or more second messages indicate one or more candidate cells to which the full MAC reset is applied.

10. The DU according to claim 1, wherein
the means for receiving is adapted to receive a plurality of first messages, each relating to the preparation of a candidate cell,
the means for sending is adapted to send a plurality of second messages to the CU, each relating to a candidate cell, in response to receiving the plurality of first messages, and
each of the plurality of second messages indicates a configuration of its corresponding candidate cell and whether the full MAC reset is applied to the corresponding candidate cell.

11. The DU according to claim 1, wherein
the means for receiving is adapted to receive a single first message relating to the preparation of a plurality of candidate cells, and
the means for sending is adapted to send a single second message to the CU in response to receiving the single first message, indicating a configuration of each of the plurality of candidate cells and indicating a list of one or more candidate cells to which the full MAC reset is applied.

12. The DU according to any one of claims 1 to 11, wherein
in the full MAC reset, the radio terminal performs a plurality of operations including initializing one or more parameters, canceling one or more triggered processes, and flushing one or more buffers, and
in the partial MAC reset, the radio terminal performs only a part of the plurality of operations.

13. A method performed by a distributed unit (DU) of a radio access network (RAN) node, comprising:
receiving one or more first messages from a central unit (CU) of the RAN node regarding preparation of one or more candidate cells for Layer-1/Layer-2 triggered mobility (LTM) of a radio terminal; and
in response to receiving the one or more first messages, sending one or more second messages to the CU indicating whether a full Medium Access Control (MAC) reset or a partial MAC reset is to be applied to an LTM cell switch between an initial source cell and any cell included in the one or more candidate cells, or between any two cells included in the one or more candidate cells.

14. A program for causing a computer to perform a method for a distributed unit (DU) of a radio access network (RAN) node, the comprising:
receiving one or more first messages from a central unit (CU) of the RAN node regarding preparation of one or more candidate cells for Layer-1/Layer-2 triggered mobility (LTM) of a radio terminal; and
in response to receiving the one or more first messages, sending one or more second messages to the CU indicating whether a full Medium Access Control (MAC) reset or a partial MAC reset is to be applied to an LTM cell switch between an initial source cell and any cell included in the one or more candidate cells, or between any two cells included in the one or more candidate cells.

15. A central unit (CU) of a radio access network (RAN) node, comprising:
means for sending one or more first messages to a distributed unit (DU) of the RAN node regarding a preparation of one or more candidate cells for Layer-1/Layer-2 triggered mobility (LTM) of a radio terminal; and
means for, after sending the one or more first messages, receiving one or more second messages from the DU indicating whether a full Medium Access Control (MAC) reset or a partial MAC reset is to be applied to an LTM cell switch between an initial source cell and any cell included in the one or more candidate cells, or between any two cells included in the one or more candidate cells.

16. The CU according to claim 15, wherein the one or more second messages indicate one or more sets of candidate cells to which the partial MAC reset is applied.

17. The CU according to claim 15, wherein
the means for sending is adapted to send a plurality of first messages to the DU, each relating to the preparation of a candidate cell,
the means for receiving is adapted to receive a plurality of second messages from the DU, each relating to a candidate cell,
each of the plurality of second messages indicates a configuration of its corresponding candidate cell and an index of a cell set to which the corresponding candidate cell belongs, and
the cell set indicates a plurality of cells for which the radio terminal does not need to perform the full MAC reset upon an LTM cell switch between them.

18. The CU according to claim 17, wherein the index of the cell set is unique among multiple candidate DUs, including the DU.

19. The CU according to claim 18, wherein
each of the plurality of first messages indicates a set, list, or range of one or more candidate values of the index of the cell set, and
each of the plurality of second messages indicates the index of the cell set selected by the DU from a first set, list, or range of candidate values.

20. The CU according to claim 19, further comprising:
means for receiving a second set, list, or range of candidate values from a source DU that provides the initial source cell; and
means for determining the first set, list, or range of candidate values from the second set, list, or range of candidate values received from the source DU.

21. The CU according to any one of claims 18 to 20, wherein the index of the cell set to which the initial source cell belongs is a predefined value.

22. The CU according to claim 17, wherein the index of the cell set is unique only within the DU.

23. The CU according to claim 15, wherein
the means for sending is adapted to send a single first message to the DU relating to the preparation of a plurality of candidate cells, and
the means for receiving is adapted to receive a single second message from the DU, indicating a configuration of each of the plurality of candidate cells and indicating one or more sets of candidate cells to which the partial MAC reset is applied.

24. The CU according to claim 15, wherein the one or more second messages indicate one or more candidate cells to which the full MAC reset is applied.

25. The CU according to claim 15, wherein
the means for sending is adapted to send a plurality of first messages to the DU, each relating to the preparation of a candidate cell,
the means for receiving is adapted to receive a plurality of second messages from the DU, each relating to a candidate cell, and
each of the plurality of second messages indicates a configuration of its corresponding candidate cell and whether the full MAC reset is applied to the corresponding candidate cell.

26. The CU according to claim 25, further comprising means for, if one of the plurality of second messages indicates that the full MAC reset is applied to its corresponding candidate cell, recognizing that the radio terminal needs to perform the full MAC reset in a case of LTM between the corresponding candidate cell and another candidate cell of the DU.

27. The CU according to claim 25, further comprising means for, if one of the plurality of second messages indicates that the partial MAC reset is applied to its corresponding candidate cell, recognizing that the radio terminal needs to perform the partial MAC reset in a case of LTM between the corresponding candidate cell and another candidate cell of the DU, other than cells to which the full MAC reset is applied.

28. The CU according to claim 15, wherein
the means for sending is adapted to send a single first message to the DU relating to the preparation of a plurality of candidate cells, and
the means for receiving is adapted to receive a single second message from the DU, indicating a configuration of each of the plurality of candidate cells and indicating a list of one or more candidate cells to which the full MAC reset is applied.

29. The CU according to any one of claims 15 to 28, wherein
in the full MAC reset, the radio terminal performs a plurality of operations including initializing one or more parameters, canceling one or more triggered processes, and flushing one or more buffers, and
in the partial MAC reset, the radio terminal performs only a part of the plurality of operations.

30. A method performed by a central unit (CU) of a radio access network (RAN) node, comprising:
sending one or more first messages to a distributed unit (DU) of the RAN node regarding a preparation of one or more candidate cells for Layer-1/Layer-2 triggered mobility (LTM) of a radio terminal; and
after sending the one or more first messages, receiving one or more second messages from the DU indicating whether a full Medium Access Control (MAC) reset or a partial MAC reset is to be applied to an LTM cell switch between an initial source cell and any cell included in the one or more candidate cells, or between any two cells included in the one or more candidate cells.

31. A program for causing a computer to perform a method for a central unit (CU) of a radio access network (RAN) node, the method comprising:
sending one or more first messages to a distributed unit (DU) of the RAN node regarding a preparation of one or more candidate cells for Layer-1/Layer-2 triggered mobility (LTM) of a radio terminal; and
after sending the one or more first messages, receiving one or more second messages from the DU indicating whether a full Medium Access Control (MAC) reset or a partial MAC reset is to be applied to an LTM cell switch between an initial source cell and any cell included in the one or more candidate cells, or between any two cells included in the one or more candidate cells.

32. A radio access network (RAN) node comprising:
means for transmitting a Radio Resource Control (RRC) message containing a configuration of one or more candidate cells for Layer-1/Layer-2 triggered mobility (LTM) to a radio terminal via an initial source cell of the LTM,
wherein the RRC message indicates, in addition to an LTM candidate identifier or cell set identifier associated with each of the one or more candidate cells, an LTM candidate identifier or cell set identifier associated with the initial source cell of the LTM.

33. The RAN node according to claim 32, wherein the LTM candidate identifier associated with the initial source cell is used to distinguish the initial source cell from other candidate cells in a subsequent LTM performed after a first LTM from the initial source cell to one of the candidate cells.

34. The RAN node according to claim 32, wherein the LTM candidate identifier or cell set identifier associated with the initial source cell is used by the radio terminal to determine whether a full Medium Access Control (MAC) reset or a partial MAC reset is applied to a first LTM cell switch from the initial source cell to one of the candidate cells.

35. A method performed by a radio access network (RAN) node, comprising:
transmitting a Radio Resource Control (RRC) message containing a configuration of one or more candidate cells for Layer-1/Layer-2 triggered mobility (LTM) to a radio terminal via an initial source cell of the LTM,
wherein the RRC message indicates, in addition to an LTM candidate identifier or cell set identifier associated with each of the one or more candidate cells, an LTM candidate identifier or cell set identifier associated with the initial source cell of the LTM.

36. A radio terminal comprising:
means for receiving a Radio Resource Control (RRC) message containing a configuration of one or more candidate cells for Layer-1/Layer-2 triggered mobility (LTM) from a radio access network (RAN) node via an initial source cell of the LTM,
wherein the RRC message indicates, in addition to an LTM candidate identifier or cell set identifier associated with each of the one or more candidate cells, an LTM candidate identifier or cell set identifier associated with the initial source cell of the LTM.

37. The radio terminal according to claim 36, further comprising means for using the LTM candidate identifier associated with the initial source cell to distinguish the initial source cell from other candidate cells in a subsequent LTM performed after a first LTM from the initial source cell to one of the candidate cells.

38. The radio terminal according to claim 37, further comprising means for retaining a configuration of the initial source cell without releasing it after the first LTM, and for reusing the configuration of the initial source cell in the subsequent LTM.

39. The radio terminal according to claim 36, further comprising means for using the LTM candidate identifier or cell set identifier associated with the initial source cell to determine whether a full Medium Access Control (MAC) reset or a partial MAC reset is applied to a first LTM cell switch from the initial source cell to one of the candidate cells.

40. A method performed by a radio terminal, comprising:
receiving a Radio Resource Control (RRC) message containing a configuration of one or more candidate cells for Layer-1/Layer-2 triggered mobility (LTM) from a radio access network (RAN) node via an initial source cell of the LTM,
wherein the RRC message indicates, in addition to an LTM candidate identifier or cell set identifier associated with each of the one or more candidate cells, an LTM candidate identifier or cell set identifier associated with the initial source cell of the LTM.

41. A radio terminal comprising:
means for receiving a Radio Resource Control (RRC) message containing a configuration of one or more candidate cells for Layer-1/Layer-2 triggered mobility (LTM) from a radio access network (RAN) node; and
means for, if a radio link failure or LTM failure is detected before an LTM cell switch from a source cell to any of the one or more candidate cells is completed after receiving the RRC message, and one of the one or more candidate cells is selected in a cell selection, performing an LTM cell switch by applying the configuration associated with the selected cell.

42. The radio terminal according to claim 41, further comprising means for determining whether to perform a full Medium Access Control (MAC) reset or a partial MAC reset in the LTM cell switch to the selected cell, with respect to a combination of the source cell and the selected cell.

43. A method performed by a radio terminal, comprising:
receiving a Radio Resource Control (RRC) message containing a configuration of one or more candidate cells for Layer-1/Layer-2 triggered mobility (LTM) from a radio access network (RAN) node; and
if a radio link failure or LTM failure is detected before an LTM cell switch from a source cell to any of the one or more candidate cells is completed after receiving the RRC message, and one of the one or more candidate cells is selected in a cell selection, performing an LTM cell switch by applying the configuration associated with the selected cell.

44. An apparatus configured to operate as a central unit control plane of a radio access network (RAN) node, comprising:
means for sending a control message to a central unit user plane of the RAN node indicating whether a full Medium Access Control (MAC) reset or a partial MAC reset is applied to switching of a serving cell of a radio terminal by Layer-1/Layer-2 triggered mobility (LTM).

45. The apparatus according to claim 44, wherein the control message is an E1 Application Protocol (E1AP) BEARER CONTEXT MODIFICATION REQUEST message.

46. The apparatus according to claim 44 or 45, wherein
in the full MAC reset, the radio terminal performs a plurality of operations including initializing one or more parameters, canceling one or more triggered processes, and flushing one or more buffers, and
in the partial MAC reset, the radio terminal performs only a part of the plurality of operations.

47. A method performed by an apparatus configured to operate as a central unit control plane of a radio access network (RAN) node, the method comprising:
sending a control message to a central unit user plane of the RAN node indicating whether a full Medium Access Control (MAC) reset or a partial MAC reset is applied to switching of a serving cell of a radio terminal by Layer-1/Layer-2 triggered mobility (LTM).

48. An apparatus configured to operate as a central unit user plane of a radio access network node, comprising:
means for receiving a control message from a central unit control plane of the RAN node indicating whether a full Medium Access Control (MAC) reset or a partial MAC reset is applied to switching of a serving cell of a radio terminal by Layer-1/Layer-2 triggered mobility (LTM).

49. The apparatus according to claim 48, wherein the control message is an E1 Application Protocol (E1AP) BEARER CONTEXT MODIFICATION REQUEST message.

50. The apparatus according to claim 48 or 49, wherein
in the full MAC reset, the radio terminal performs a plurality of operations including initializing one or more parameters, canceling one or more triggered processes, and flushing one or more buffers, and
in the partial MAC reset, the radio terminal performs only a part of the plurality of operations.

51. A method performed by an apparatus configured to operate as a central unit user plane of a radio access network node, the method comprising:
receiving a control message from a central unit control plane of the RAN node indicating whether a full Medium Access Control (MAC) reset or a partial MAC reset is applied to switching of a serving cell of a radio terminal by Layer-1/Layer-2 triggered mobility (LTM).
